# EUROPÄISCHE PATENTSCHRIFT

(11) **EP 3 536 601 B1**
(45) Veröffentlichungstag und Bekanntmachung des Hinweises auf die Patenterteilung: **01.06.2022**
(21) Anmeldenummer: 19160774.6
(22) Anmeldetag: 05.03.2019
(51) Int. Cl.: B64C 1/00, B64D 9/00, B64C 1/20

(54) **SEITENFÜHRUNG, SEITENFÜHRUNGSGRUPPE, FRACHTDECK, FLUGZEUG**
LATERAL GUIDE, LATERAL GUIDE GROUP, FREIGHT DECK, AIRCRAFT
GUIDAGE LATÉRAL, GROUPE DE GUIDAGES LATÉRAUX, PONT CARGO, AÉRONEF

(30) Priorität: 07.03.2018 DE 102018105216; 13.04.2018 DE 102018108803
(43) Veröffentlichungstag der Anmeldung: 11.09.2019
(73) Patentinhaber: Telair International GmbH, 83714 Miesbach (DE)
(72) Erfinder: Huber, Thomas, 83727 Schliersee (DE); Holzner, Richard, 83071 Stephanskirchen (DE)
(74) Vertreter: Würmser, Julian

(56) Entgegenhaltungen:
- WO-A1-2005/012082
- DE-A1-102009 018 487
- DE-A1-102010 036 983
- DE-A1-102015 004 767
- DE-A1-102017 206 186

## Beschreibung

Die Erfindung betrifft eine Seitenführung zum Führen von Frachtstücken, eine Seitenführungsgruppe mit einer Vielzahl von entsprechenden Seitenführungen sowie ein mit einer entsprechenden Seitenführung oder Seitenführungsgruppe ausgestattetes Frachtdeck oder Flugzeug.

Es ist bekannt, dass Laderäume von Flugzeugen für unterschiedliche Verwendungszwecke häufig umgebaut werden. Beispielsweise kann es notwendig sein, ein Frachtdeck in Abhängigkeit von den zu ladenden Frachtstücken zu konfigurieren. Bei dem Transport von Ladung in Flugzeugen werden Frachtstücke, z.B. Container oder Paletten, mit genormten Abmessungen verwendet. So gibt es für Container/Paletten beispielsweise folgende Normgrößen: 223,5 auf 317,5 cm (88 Zoll x 125 Zoll), 243,8 cm auf 317,5 cm (96 Zoll x 125 Zoll), 223,5 cm auf 157,5 cm (88 Zoll x 62 Zoll), 153,4 auf 156,2 cm (60,4 x 61,5 Zoll), 119,3 auf 153,4 cm (47 x 60,4 Zoll) und verschiedenste Kombinationen hieraus. Im militärischen Bereich werden Paletten mit einer Abmessung von 274,3 cm auf 223,5 cm (108 Zoll x 88 Zoll) verwendet. Für besonders große Frachtstücke werden z.B. Paletten mit 243,8 auf 497,8 cm (96 x 196 Zoll) oder 243,8 auf 605,8 cm (96 x 238,5 Zoll) verwendet. Letztere werden auch als 16ft bzw. 20ft Paletten bezeichnet und orientieren sich an den Normgrößen von ISO668 (Intermodal) Containern für Seefracht bzw. LKW-Fracht. Zum Festhalten und Führen derartiger genormter Frachtstücke werden auf dem Frachtdeck montierte Seitenführungen verwendet. Für eine optimale Auslastung eines Frachtraums ist es notwendig, eine Vielzahl von Konfigurationsmöglichkeiten anzubieten, wobei ein schnelles Umrüsten des Frachtdecks eine hohe Priorität genießt. Geeignete Seitenführungen müssen schnell und einfach anbringbar und umkonfigurierbar sein, da die Kosten für das Betreiben von entsprechenden Flugzeugen sehr hoch sind. Des Weiteren soll die Konfiguration sehr einfach durchführbar sein, da das Personal, das diese Umkonfigurationen durchführt, häufig keine oder lediglich eine schlechte Schulung für die verwendeten Frachtdecks genossen hat. Hinzu kommt, dass die Seitenführungen sehr robust sein müssen, da diese sehr hohen Lasten ausgesetzt sind und eine schonende Behandlung aufgrund des hohen Zeitdrucks beim Be- und Entladen nicht gefordert werden kann.

Ein Frachtdeck mit entsprechenden Seitenführungen ist häufig der Nässe, hohen Temperaturunterschieden, Staub und anderen rohen Einflüssen ausgesetzt. Ein defektes Frachtdeck - auch bereits ein defektes Funktionselement (Rolle, Führung, Riegel, Kralle) des Frachtdecks - kann dazu führen, dass der Stellplatz nicht verwendet werden kann, oder im schlechtesten Fall das entsprechende Flugzeug für mehrere Tage nicht eingesetzt werden kann. Ein derartiger Ausfall ist sehr teuer.

Die Bestückung des Frachtdecks eines Flugzeugs macht sich bei dem Gesamtgewicht des Flugzeugs deutlich bemerkbar, so dass es wünschenswert ist, hier Gewicht einzusparen.

Aus der EP 1 179 472 A2 sind Seitenführungen bekannt, die es ermöglichen, ein Frachtdeck schnell und einfach umzukonfigurieren, so dass unterschiedliche Frachtstücke mit unterschiedlichen Abmessungen geladen werden können. Die dort verwendeten Seitenführungen lassen sich hierfür teilweise absenken, so dass andere Seitenführungen die Führungs- und Befestigungsfunktion übernehmen. Ein Nachteil des in der EP 1 179 472 A2 beschriebenen Frachtdecks besteht darin, dass die Konfiguration mitunter sehr aufwendig ist. Des Weiteren müssen für die unterschiedlichen Konfigurationen des Frachtdecks eine Vielzahl von Funktionselementen, z. B. Seitenriegel, Längsriegel, PDUs, vorgesehen werden, die insgesamt ein sehr hohes Gewicht haben.

Aus der DE 102010036983 ist eine gattungsbildende Seitenführung bekannt.

Es ist eine Aufgabe der vorliegenden Erfindung eine Seitenführung für ein Frachtdeck, das eine Vielzahl von unterschiedlichen Konfigurationen ermöglicht, bereitzustellen, die robust ist, sich einfach bedienen lässt und bei einer Bestückung zu einem Frachtdeck mit einem geringen Gewicht führt. Des Weiteren soll eine entsprechende Seitenführungsgruppe und ein entsprechendes Frachtdeck bereitgestellt werden.

Eine weitere Herausforderung in diesem Feld der Technologie besteht darin, dass Flugzeuge teilweise im Lauf ihrer Nutzungszeit in unterschiedlicher Art und Weise eingesetzt werden. So verwendet man moderne Maschinen häufig für den Transport von Passagieren, so dass im oberen Deckbereich Sitze für die Passagiere angebracht sind und der untere Deckbereich zum Aufnehmen von Frachtstücken ausgestattet ist. Diese Maschinen werden manchmal umgerüstet ("conversion"), wobei auch das Passagierdeck in ein oberes Frachtdeck umgewandelt wird, so dass auch hier Frachtstücke, insbesondere Paletten und Container, untergebracht werden können. Bei einer derartigen Umrüstung werden die Sitze entfernt und die Bodenpaneele ausgebaut. Danach werden bestehende Sitzschienen ersetzt und teilweise neue Sitzschienen angebracht. Auch ist es üblich, Sitzschienenteilsegmente anzubringen, um innerhalb der Sitzschienen bzw. Lochschienen Funktionselemente, beispielsweise Seitenführungen oder andere Riegel, anzubringen. Ein entsprechender Umbau ist aufwendig und teuer. Es ist daher eine weitere Aufgabe der vorliegenden Erfindung, einen derartigen Umbau möglichst einfach zu gestalten und Flugzeuge mit einem möglichst funktionalen Frachtdeck auszustatten, wobei stets versucht wird das Gewicht des Frachtdecks so gering wie möglich zu halten.

Die besagten Aufgaben werden durch den Gegenstand des Anspruchs 1 gelöst.

Insbesondere werden die Aufgaben durch eine Seitenführung zum Führen und/oder Halten von Frachtstücken in einem Flugzeug gelöst, wobei die Seitenführung umfasst:
- eine sich in Längsrichtung erstreckende Befestigungsschiene;
- mindestens eine Seitenführungsvorrichtung, die in Längsrichtung an unterschiedlichen Positionen an der Befestigungsschiene befestigbar ist,
- mindestens eine erste und mindestens eine zweite Befestigungsvorrichtung zur Befestigung der Seitenführung in einer jeweiligen Lochschiene auf einem Frachtdeck des Flugzeugs,
wobei mindestens die erste Befestigungsvorrichtung die Befestigungsschiene derart umgreift und/oder in die Befestigungsschiene eingreift, dass die erste Befestigungsvorrichtung in Längsrichtung relativ zur zweiten Befestigungsvorrichtung verschiebbar ist, um die Seitenführung auf unterschiedliche relative Abstände der Lochschienen einzustellen.

Seitenführungen in Flugzeugen werden üblicherweise dazu verwendet, Frachtstücke in Längsrichtung (x-Richtung) des Flugzeugs (von Bug zu Heck, oder von Heck zu Bug) zu leiten. Während des Fluges nehmen sie Kräfte quer (y- und z-Richtung) zur Längsrichtung auf und halten die Frachtstücke in ihrer Position.

Ein Gedanke der vorliegenden Erfindung besteht darin, dass die Seitenführungsvorrichtung, die die eigentliche Führungs- und Haltefunktion der Seitenführung wahrnimmt, verschiebbar in einem Befestigungsrahmen gelagert ist. Die Seitenführungsvorrichtung kann also unterschiedliche Positionen einnehmen, um Frachtstücke mit unterschiedlichen Abmessungen zu halten und zu führen. Somit können zahlreiche Seitenführungsvorrichtungen, die an unterschiedlichen Positionen innerhalb des Frachtdecks angeordnet werden müssen, eingespart werden. Vorzugsweise lässt sich die mindestens eine Seitenführungsvorrichtung entlang der Befestigungsschiene verschieben.

Ein weiterer Gedanke der vorliegenden Erfindung besteht darin, dass die erste Befestigungsvorrichtung die Befestigungsschiene derart umgreift und/oder in die Befestigungsschiene eingreift, dass die erste Befestigungsvorrichtung ebenfalls in Längsrichtung verschiebbar ist. Die Befestigungsvorrichtung kann beispielsweise ein Befestigungssockel sein, der mit entsprechenden Zapfen oder Leisten zur Fixierung der Befestigungsschiene am Frachtdeck in entsprechende Lochschienen eingreift. Die Verschiebbarkeit der ersten Befestigungsvorrichtung hat diverse Vorteile. Zum einen können Seitenführungen, die mit entsprechenden verschiebbaren Befestigungsvorrichtungen ausgestattet sind, einfacher am Frachtdeck montiert werden. Weiterhin sind entsprechend ausgestattete Seitenführungen an einer Vielzahl von Stellen einsetzbar. So kann beispielsweise im Heck des Flugzeugs der Frachtraum verengt sein, so dass andere Lochschienenabstände vorgegeben sind. Durch die Verschiebbarkeit der ersten Befestigungsvorrichtung kann die gleiche Seitenführung auch dort eingesetzt werden.

Von einem Fertigungsaspekt lassen sich entsprechende Seitenführungen industriell fertigen und für eine Vielzahl von unterschiedlichen Flugzeugen einsetzen.

Die Verwendung einer Befestigungsschiene an Stelle von einem Befestigungsrahmen bzw. einem U-Profil hat den weiteren Vorteil, dass bei sehr geringem Gewicht eine hochfunktionale Seitenführung bereitgestellt werden kann. Auch ist es bedingt durch die Verwendung der Befestigungsschiene möglich, die Bauhöhe der Seitenführung, zumindest im führungsvorrichtungsfreien Bereich zu verringern.

In einer Ausführungsform hat die Befestigungsschiene einen Querschnitt eines Doppel-T-Trägers. Der obere Abschnitt des T-Trägers kann dazu verwendet werden, um einen Formschluss zu der mindestens einen Seitenführungsvorrichtung herzustellen. Der untere Abschnitt des T-Trägers kann einen entsprechenden Formschluss mit einer oder mehreren Befestigungsvorrichtungen herstellen. Die einzelnen T-Träger des Doppel-T-Trägers helfen also, Zuglasten (z-Richtung) effizient in die Struktur des Flugzeugs einzuleiten. Weiterhin ermöglicht diese Form, die Verschiebbarkeit der Befestigungsvorrichtungen sowie der mindestens einen Seitenführungsvorrichtung zu gewährleisten.

Erfindungsgemäß lässt sich der Doppel-T-Trägerquerschnitt auch als X-Querschnitt definieren. In anderen Worten müssen die Querbalken der einzelnen T-Träger nicht zwangsläufig über die gesamte Länge parallel zueinander verlaufen, sondern können, insbesondere mittig, eine gewissen Neigung aufweisen.

In einer Ausführungsform ist mindestens eine der Befestigungsvorrichtungen über einen Formschluss mit (Seiten-)Spiel derart an der Befestigungsschiene befestigt, dass die Befestigungsschiene aus einer Grundstellung gegenüber der Befestigungsvorrichtung verdrehbar ist. Die Verdrehbarkeit kann derart ausgestaltet sein, dass gegenüber der Grundstellung eine Verdrehung von mindestens 10° oder von mindestens 20° möglich ist. Diese Verdrehung kann sowohl in die Plus- als auch in die Minus-Richtung erfolgen.

Erfindungsgemäß kann die Grundstellung derart definiert sein, dass die Befestigungsvorrichtung im Wesentlichen quer zur Befestigungsschiene verläuft. Soweit die Befestigungsvorrichtung in eine Lochschiene einrastet, bilden die Lochschiene mit der Befestigungsschiene in der Grundstellung einen rechten Winkel.

Das Spiel beim Eingriff in die Befestigungsschiene ermöglicht ein Verdrehen gegenüber dieser Grundstellung.

Die hierdurch erreichten Freiheitsgrade können eingesetzt werden, um die erfindungsgemäße Seitenführung auch in Lochschienen bzw. Lochschienensegmenten zu verankern, die nicht in Längsrichtung des Flugzeugs verlaufen. Wie bereits erläutert, verengt sich der Frachtraum im Heckbereich, so dass hier entsprechend schräg verlaufende Lochschienen vorgesehen sein können.

Es ist möglich, mindestens eine Seitenführungsvorrichtung derart auszugestalten, dass sie nach oben hin (z-Richtung) abnehmbar und an einer anderen Position festsetzbar ist. Vorzugsweise wird jedoch bei mindestens einer Seitenführungsvorrichtung ein Formschluss zur Befestigungsschiene hergestellt, so dass nur eine Verschiebbarkeit in Längsrichtung der Befestigungsschiene möglich ist. Die mindestens eine Seitenführungsvorrichtung umgreift die Befestigungsschiene und hat im unteren Bereich den Querschnitt eines C-Profils. Ein Austausch der Seitenführungsvorrichtung kann dennoch dadurch erreicht werden, dass die Seitenführungsvorrichtung über eines der Enden der Befestigungsschiene hinausgeschoben wird. Hierdurch kann eine einfache Wartung bzw. ein einfacher Austausch der Seitenführungsvorrichtungen gewährleistet werden. Erfindungsgemäß können so einmal installierte Befestigungsschienen mit unterschiedlichen Seitenführungsvorrichtungen ausgestattet werden, um unterschiedliche Konfigurationen anbieten zu können.

In einer Ausführungsform weist die Seitenführung mindestens eine Führungsrolle auf, die in der Befestigungsschiene um eine Rotationsachse drehbeweglich gelagert ist. Die Rotationsachse verläuft im Wesentlichen parallel zur Längsrichtung der Befestigungsschiene, so dass Frachtstücke quer zur Befestigungsschiene transportiert bzw. geführt werden können. Zur Aufnahme der Führungsrolle, gegebenenfalls mit einem Gehäuse, weist die Befestigungsschiene in einer bevorzugten Ausführungsform eine nach oben hin offene Aussparung, beispielsweise in Form eines V-Profils, auf. Das Gehäuse der Führungsrolle kann eine korrespondierende Form, insbesondere eine V-Form haben.

Je nach Ausführungsform kann die Führungsrolle bzw. die Achse der Führungsrolle mit der Seitenführungsvorrichtung verbunden sein oder nicht. In einer Ausführungsform ist ein/das Gehäuse der Führungsrolle integraler Bestandteil der Seitenführungsvorrichtung. In einer anderen Ausführungsform lässt sich die Führungsrolle zusammen mit dem Gehäuse entnehmen und derart einsetzen, dass eine Verschiebung der Führungsrolle in Längsrichtung nicht mehr möglich ist.

Die Seitenführung weist also mindestens eine Führungsrolle auf, die den Transport der Frachtstücke erleichtert. Diese Führungsrolle nimmt also wie auch die Seitenführungsvorrichtung unterschiedliche Positionen ein. Durch das bewegliche Lagern der Führungsrolle können eine Vielzahl von Führungsrollen eingespart werden. Des Weiteren ist ein modernes Frachtdeck so dicht mit Funktionselementen (z.B. Seitenführungen, Führungsrollen, Riegelkrallen, PDUs) bestückt, dass es häufig schwierig ist, den richtigen Platz für die nötigen Funktionselemente auf dem Frachtdeck zu finden. Durch das erfindungsgemäße gezielte Einsparen von Führungsrollen und Seitenführungsvorrichtungen kann ein Frachtdeck hergestellt werden, das eine noch höhere Anzahl von unterschiedlichen Konfigurationen ermöglicht.

Die Seitenführung kann mindestens eine Festsetzvorrichtung zum Festsetzen der Seitenführungsvorrichtung an mindestens zwei sich unterscheidenden Positionen an der Befestigungsschiene umfassen. Es ist möglich, die erfindungsgemäße Seitenführung derart auszugestalten, dass sie sich in einem Bereich verschieben lässt, in dem sie beim Beladen und Entladen die Funktion eines Anschlags zum Schutz der Struktur des Flugzeugs wahrnimmt. Diese Funktion wird speziell im Frachttürbereich, z.B. des oberen Frachtdecks, verwendet, wenn Frachtstücke, z.B. Container und/oder Paletten, durch "Reindrehen" geladen werden sollen, welche länger sind als die Frachttür breit ist. In diesem Fall werden die Seitenführungsvorrichtungen gegenüber der Frachttür soweit als möglich nach außen - nahe an die Außenhaut des Flugzeugs - geschoben, um einen möglichst großen Drehbereich zu erhalten.

Die Festsetzvorrichtung kann Rastelemente und Gegenrastelemente an definierten Positionen an der Befestigungsschiene umfassen. Geeignet ausgebildete Rastelemente und Gegenrastelemente ermöglichen die Einnahme von vordefinierten Positionen seitens der Seitenführungsvorrichtungen. Diese Positionen können so gewählt werden, dass Frachtstücke mit vorgegebenen Standardabmessungen geführt werden können. Insofern erleichtern diese Rast- und Gegenrastelemente das Einnehmen einer bestimmten vorgegebenen Konfiguration.

Die Festsetzvorrichtung kann mindestens einen Fixierungszapfen umfassen, der durch Bohrungen in der Befestigungsschiene gesteckt wird. In einer Ausführungsform laufen diese Bohrungen im angeordneten Zustand der Seitenführung in Längsrichtung des Flugzeugs - also quer zur Längsrichtung der Befestigungsschiene.

Bei dem Fixierungszapfen kann es sich um einen Kugelsperrstift handeln, der beim Einbringen einrastet, so dass ein Herausgleiten des Fixierzapfens, beispielsweise aufgrund von Vibrationen, verhindert wird. Durch einen am Kopf des Stifts vorgesehenen Knopf lässt sich die Sperrung lösen, so dass ein einfaches Entnehmen des Fixierungszapfens möglich ist.

In einer Ausführungsform lässt sich mindestens eine Seitenführungsvorrichtung in einer Position relativ nahe am Ende der Befestigungsschiene festsetzen.

Beispielsweise kann ein Festsetzen innerhalb von 5 cm vom Ende der Befestigungsschiene erfolgen. Durch die Vorgabe einer entsprechenden Fixierungsposition derart weit außen - nahe an der Flugzeughaut - ist es möglich, beispielsweise im Be- und Entladebereich derart viel Platz einzuräumen, dass ein problemloses Drehen der Fracht in diesem Bereich möglich ist. Gleichzeit dient die Führungsvorrichtung aber noch als Anschlag zum Schutz der Flugzeugstruktur.

Die Befestigungsschiene kann eine Breite von maximal 10 cm, insbesondere von maximal 8 cm, haben. In einer Ausführungsform ist die Befestigungsschiene lediglich ca. 6 cm breit.

Die Befestigungsschiene kann eine Befestigungslänge von mindestens 15, 20, 30 oder 50 cm haben. Auch längere Ausführungsformen (z.B. 1 m bis 1.5 m) sind denkbar. In diesem Fall überspannt die Befestigungsschiene mindestens zwei, vorzugsweise drei oder auch mehrere Lochschienen. In solchen Fällen wird die Befestigungsschiene mittels der nötigen Anzahl von Befestigunsvorrichtungen an jeder gekreuzten bzw. überspannten Lochschiene befestigt.

In einer Ausführungsform ist die Befestigungsschiene also relativ lang, so dass die Befestigungspunkte, in denen die Befestigungsvorrichtungen angebracht sind, relativ weit auseinanderliegen können. Dies führt zwar dazu, dass die Befestigungsschiene aufgrund der Länge schwerer wird. Andererseits kann bei der Umrüstung eines Flugzeugs darauf verzichtet werden, zusätzliche Lochschienen bzw. Sitzschienen für die Seitenführung vorzusehen, wodurch Gewicht in erheblichem Maße eingespart werden kann. In einer Ausführungsform werden für die Befestigung der Seitenführung nur dort Lochschienen vorgesehen, wo sich Längsträger befinden.

Eine der Seitenführungsvorrichtungen kann einen Anschlag und/oder eine Riegelkralle umfassen, der bzw. die derart an der Befestigungsschiene befestigt ist, dass der Anschlag bzw. die Riegelkralle von einer hochgestellten Arbeitsposition in eine abgesenkte Ruheposition verschwenkbar ist. Insofern ist es nicht nur möglich, dass der Anschlag bzw. die Riegelkralle an der Seitenführungsvorrichtung verschiedene Funktionspositionen einnimmt, um die Frachtstücke in diesen zu führen und zu halten. Zusätzlich kann der Anschlag oder die Riegelkralle abgesenkt werden, so dass sie von Frachtstücken überfahrbar sind. Somit lassen sich weitere Konfigurationen des Frachtdecks gewährleisten. Es kann ein Frachtdeck geschaffen werden, das flexibel für die Verriegelung unterschiedlicher Frachtstück-Grössen angepasst werden kann. Es so ebenfalls möglich, ein Frachtdeck zu schaffen, das keine (überstehende) Seitenführungen aufweist und z.B. zur Beladung von einem Fahrzeug mit einer oder mehreren Platten überdeckt werden kann.

In einer Ausführungsform hat die Seitenführung zwei Seitenführungsvorrichtungen, wobei die innenliegende Seitenführungsvorrichtung zwischen der Arbeitsposition und der Ruheposition verschwenkbar ist.

Die Seitenführungsvorrichtung kann um eine Schwenkachse drehbeweglich an der Befestigungsschiene befestigt sein.

Der Anschlag bzw. die Riegelkralle an der Seitenführungsvorrichtung kann auf mindestens einer Seite Schrägflächen aufweisen, um diese beim seitlichen Überfahren durch ein Frachtstück aus der Arbeitsposition in die Ruheposition zu bewegen.

Die Seitenführungsvorrichtung kann mindestens eine Riegelkralle zum zumindest abschnittsweisen Umgreifen der Frachtstücke umfassen.

Die Riegelkralle kann federnd an der Befestigungsschiene befestigt sein. Insofern ist es möglich, auf die Riegelkralle wirkende Kräfte federnd aufzunehmen und über die Befestigungsschiene in das Frachtdeck abzuleiten.

In einer Ausführungsform ist mindestens eine Befestigungsvorrichtung derart ausgestattet, dass sie sich schräg in eine Lochschiene einbringen und dort durch ein Herabsenken in die horizontale Ebene verankern lässt. Beispielsweise kann die erste bzw. zweite Befestigungsvorrichtung eine Leiste zum Einführen der Befestigungsvorrichtung in die jeweilige Lochschiene entlang einer Einbringrichtung und mindestens einen der Leiste gegenüberliegenden Zapfen zum Sichern der Befestigungsvorrichtung gegen einen Verschub quer zur Einbringrichtung aufweisen. Vorzugsweise ist die jeweilige Befestigungsvorrichtung derart ausgestaltet, dass der gegenüberliegende Zapfen im angeordneten Zustand der Seitenführung in einem Loch der Lochschiene sitzt.

In einer Ausführungsform sind von diesen Zapfen mindestens zwei gegenüberliegend zu der Leiste vorgesehen, so dass in Querrichtung wirkende Kräfte effizient an die entsprechende Lochschiene weitergegeben werden können.

Die oben genannte Aufgabe wird ebenfalls durch eine Seitenführungsgruppe gelöst, wobei diese Seitenführungsgruppe eine Vielzahl von Seitenführungen, wie diese bereits beschrieben wurden, umfasst, wobei die Seitenführungsvorrichtungen der einzelnen Seitenführungen mindestens eine gemeinsame Profilschiene aufweisen, die verschiebbar an der Befestigungsschiene befestigt ist. Die Schiene kann starr oder abnehmbar mit den einzelnen Seitenführungsvorrichtungen verbunden sein und die Frachtstücke führen.

Die Schiene kann Riegelkrallen, vorzugsweise von sich unterscheidenden Typen, aufweisen. Da sich die Frachtstücke nicht nur in ihren Querabmessungen sondern auch in ihren Längsabmessungen unterscheiden, ist es vorteilhaft, wenn die Schiene sich über längere Abschnitte erstreckt. Insofern können geeignete Funktionselemente, insbesondere Riegelkrallen, so vorgesehen werden, dass für jedes Frachtstück eine geeignete Halterung bereitsteht. Die Riegelkrallen können unmittelbar oberhalb eines entsprechenden Befestigungsrahmens oder diesbezüglich versetzt angeordnet werden. Es ist also möglich, die Position der Funktionselemente in Längsrichtung des Flugzeugs unabhängig von der Position der Befestigungsschienen zu wählen. Des Weiteren kann eine Schiene eine Vielzahl von unterschiedlichen Riegelkrallen aufnehmen, die vorzugsweise in sich unterscheidenden Abständen hieran angeordnet sind.

Besonders im Be- und Entladebereich ist eine entsprechende Seitenführungsgruppe besonders vorteilhaft, da hier die Fracht teilweise schräg in den Frachtraum hineinfährt.

Des Weiteren wird die Aufgabe durch ein Frachtladedeck mit mindestens einer der beschriebenen Seitenführungsgruppen und/oder mit mindestens einer der beschriebenen Seitenführungen gelöst.

Für ein entsprechendes Frachtladedeck ergeben sich ähnliche Vorteile, wie sie bereits in Verbindung mit der Seitenführung bzw. der Seitenführungsgruppe beschrieben wurden.

Die eingangs skizzierten Aufgaben, insbesondere die der leichteren Umrüstung eines Passagierflugzeugs in ein Frachtflugzeug, werden weiterhin durch ein Flugzeug gemäß dem Anspruch 13 gelöst.

Insbesondere wird die Aufgabe durch ein Flugzeug mit einem Frachtdeck gelöst, wobei das Flugzeug die nachfolgenden Tragstrukturelemente umfasst:
- Flugzeugaußenhaut,
- mit der Flugzeugaußenhaut verbundene Spanten;
- an den Spanten befestigte Querträger;
- an den Querträgern befestigte Längsträger;
- parallel zu den Querträgern verlaufende Seitenprofile, insbesondere Z-Profile, die über Scherträger (unmittelbar) mit der Flugzeugaußenhaut verbunden sind.

Erfindungsgemäß ist das Flugzeug mit mindestens einer Seitenführung ausgestattet. Bei der Seitenführung kann es sich um eine der Seitenführungen handeln, wie diese vorab bereits beschrieben wurden. Die Seitenführung kann eine sich in Querrichtung des Flugzeugs erstreckende Befestigungsschiene sowie mindestens eine Seitenführungsvorrichtung, die an unterschiedlichen Positionen der Befestigungsschiene befestigbar ist, umfassen. Erfindungsgemäß kann die Befestigungsschiene über einen ersten Befestigungspunkt und einen zweiten Befestigungspunkt mit einigen der Tragstrukturelementen des Flugzeugs verbunden sein, wobei sich der erste Befestigungspunkt oberhalb eines der Seitenprofile und der zweite Befestigungspunkt oberhalb eines der Querträger befinden kann.

Als Befestigungspunkt können erfindungsgemäß der Punkt bzw. die Region verstanden werden, in der auf die Seitenführung wirkende Zugkräfte (z-Richtung) hauptsächlich in die Tragstruktur des Flugzeugs eingeleitet werden. Soweit zur Befestigung Schrauben verwendet werden, ist der Befestigungspunkt im Wesentlichen die Region, in der die Schraube in die Tragstrukturelemente eingreift. Soweit als Befestigungsvorrichtungen Adapter verwendet werden, die in Sitzschienen eingreifen, so ist der Befestigungspunkt die Region, die der entsprechende Adapter definiert. Dass sich ein Befestigungspunkt oberhalb eines Elements, beispielsweise oberhalb des Seitenprofils, befindet, heißt nicht zwangsläufig, dass die Befestigung nicht innerhalb dieses Elements erfolgen kann.

Die beschriebene erfindungsgemäße Lösung hat den Vorteil, dass in den Seitenbereichen des Frachtdecks, an denen ein relativ großer Abstand zwischen den Seitenprofilen und den Querträgern besteht, keine zusätzlichen Sitzschienen eingezogen werden müssen, die nicht (unmittelbar) oberhalb von Querträgern sitzen.

Durch das Verzichten auf entsprechende Sitzschienen bzw. Lochschienen kann Gewicht eingespart werden.

In einer Ausführungsform kann zwischen dem ersten und dem zweiten bzw. nächsten Befestigungspunkt ein Abstand von mehr als 15 cm, insbesondere von mehr als 20 cm vorgesehen sein.

Der erste Befestigungspunkt ist vorzugsweise relativ nahe an der Flugzeugaußenhaut vorgesehen. In einer Ausführungsform ist die kürzeste Distanz zwischen der Flugzeugaußenhaut und dem ersten Befestigungspunkt kleiner oder gleich 30 cm. Es sind auch Ausführungsformen möglich, bei denen diese Maximaldistanz kleiner als 25 oder kleiner als 20 cm ist.

In einer Ausführungsform ist die Befestigungsschiene am ersten Befestigungspunkt über ein Fitting an dem Seitenprofil befestigt. Zusätzlich oder alternativ kann die Befestigungsschiene am zweiten Befestigungspunkt an einer dem Querträger montierten Lochschiene befestigt sein.

Das Verwenden eines Fittings erlaubt das einfache Nachrüsten eines Befestigungspunkts. Weiterhin kann durch die Verwendung eines Fittings mit einem (kurzen) Lochschienensegment gegenüber einer Lochschiene erheblich Gewicht eingespart werden.

In einer Ausführungsform ist mindestens eine Seitenführung im Bereich des Flügelmittelkastens ("wing box") angeordnet. Eine Anordnung in diesem Bereich erfordert besonders hohe Flexibilität, da es aufgrund des Vorhandenseins der Flügel in diesen Bereichen zu erheblichen Verformungen kommen kann. Die besagte Seitenführung kann erfindungsgemäß an einem/dem ersten Befestigungspunkt mit einem Schlitten verbunden sein, wobei der Schlitten in Querrichtung des Flugzeugs beweglich auf einem Vorsprung sitzt, der mit einem der Spanten und/oder dem Flügelmittelkasten verbunden ist. Aufgrund der Anordnung ist es möglich, dass eine Verformung der Spanten die Funktion der Seitenführung und des Frachtdecks nicht beeinflusst. Die geforderte Verformbarkeit ist gewährleistet. Entstehende Kräfte werden mittelbar (über den Spant) oder unmittelbar in den Flügelmittelkasten eingeleitet.

Der Schlitten kann eine sich in Querrichtung des Flugzeugs erstreckende Aufnahme aufweisen, in die der Vorsprung formschlüssig eingreift. Die Aufnahme verläuft vorzugsweise in Querrichtung des Flugzeugs. Die Aufnahme kann ein Gleitmittel und/oder eine Innenauskleidung aus gleitfähigem Material, z.B. Polyamid, und/oder Vorrichtungen zur kraftfreien Bewegung, z.B. Rollenlager, des Vorsprungs innerhalb der Aufnahme aufweisen, rechteckig oder quadratisch ausgebildet sein.

Weitere vorteilhafte Ausführungsformen ergeben sich aus den Unteransprüchen.

Nachfolgend wird die Erfindung anhand von Zeichnungen näher erläutert. Hierbei zeigen:
- Fig. 1: eine erste Ansicht eines Frachtdecks ohne Paneele, wobei eine Vielzahl von Seitenführungen angeordnet ist;
- Fig. 2: eine weitere Ansicht auf das Frachtdeck aus Fig. 1;
- Fig. 3: eine perspektivische Detailansicht einer erfindungsgemäßen Seitenführung;
- Fig. 4: eine Seitenansicht auf die Seitenführung gemäß Fig. 3;
- Fig. 5: eine Ansicht von unten auf die Seitenführung gemäß Fig. 3;
- Fig. 6: eine Ansicht von hinten auf die Seitenführung gemäß Fig. 3;
- Fig. 7: eine Ansicht von vorne auf die Seitenführung gemäß Fig. 3;
- Fig. 8: verschiedene unterschiedliche Positionen, die die Seitenführungsvorrichtung der Seitenführung aus Fig. 3 einnehmen kann;
- Fig. 9: eine Detailansicht auf den hinteren Teil der Seitenführung gemäß Fig. 3;
- Fig. 10: eine weitere Variante der erfindungsgemäßen Seitenführung, wie diese bereits in den Fig. 1 und 2 gezeigt wurde;
- Fig. 11: eine Ansicht von unten auf die Seitenführung gemäß Fig. 10;
- Fig. 12: eine Detailansicht der Befestigungsvorrichtung von hinten;
- Fig. 13: eine Detailansicht der Befestigungsvorrichtung von der Seite;
- Fig. 14: eine weitere Ansicht auf ein Frachtdeck mit einer Vielzahl von Seitenführungen, wobei in Fig. 14 der Bereich des Flügelmittelkastens gezeigt ist;
- Fig. 15: einen Befestigungskörper zur Befestigung der Seitenführung aus Fig. 14;
- Fig. 16 und 17: weitere Ansichten auf dem Befestigungskörper aus Fig. 15;
- Fig. 18: eine schematische Darstellung des Befestigungskörpers aus Fig. 15;
- Fig. 19 und 20: schematische Darstellungen eines Schlittens zur Befestigung eines Fittings;
- Fig. 21: einen schematischen Querschnitt durch einen Flugzeugrumpf mit oberem und unterem Frachtdeck.

Bei der nachfolgenden Beschreibung werden für gleiche und gleich wirkende Teile dieselben Bezugsziffern verwendet.

Üblicherweise verwendet man ein kartesisches Koordinatensystem, um innerhalb eines Flugzeugs einzelne Richtungsangaben bereitzustellen. Hierbei erstreckt sich die x-Achse vom Heck zum Bug, die y-Achse verläuft quer zur x-Achse und liegt im Wesentlichen in der von den Flügeln aufgespannten Ebene. Die z-Achse steht senkrecht auf der x- und y-Achse.

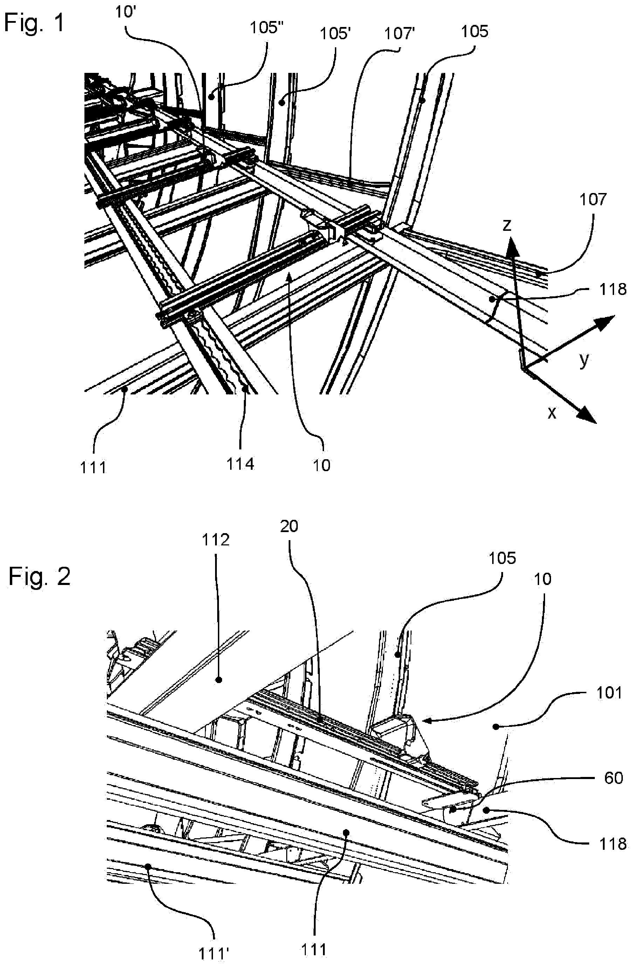

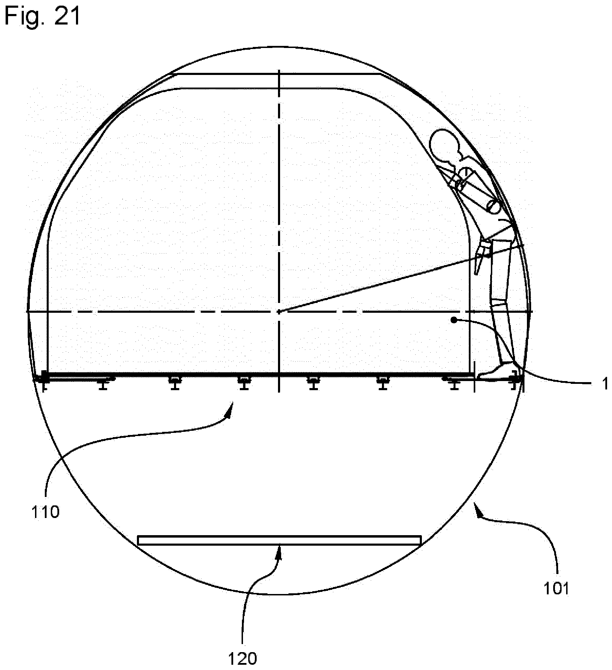

Die Fig. 1 und 2 zeigen ein oberes Frachtdeck (vergleiche Fig. 21). Es ist eine Vielzahl von kreisförmigen Spanten 105, 105', 105", 105‴ zu sehen, an deren Außenseite die Flugzeugaußenhaut 101 angeordnet ist. Die Spanten 105, 105', 105", 105‴ bilden zusammen mit der Flugzeugaußenhaut 101 den Rumpf des Flugzeugs. Innerhalb des Flugzeugs verlaufen Querträger 111, 111' entlang der y-Achse des Flugzeugs. Die Querträger 111, 111' sind mit ihren Enden jeweils an einem der Spanten 105, 105', 105" befestigt, so dass der Rumpf versteift wird. Die Oberseite der Querträger 111 definieren eine Ebene (x-y-Ebene), auf der die Längsträger 112 vorzugsweise in gleichen Abständen, z.B. von ca. 50 bis 70 cm, angeordnet sind.

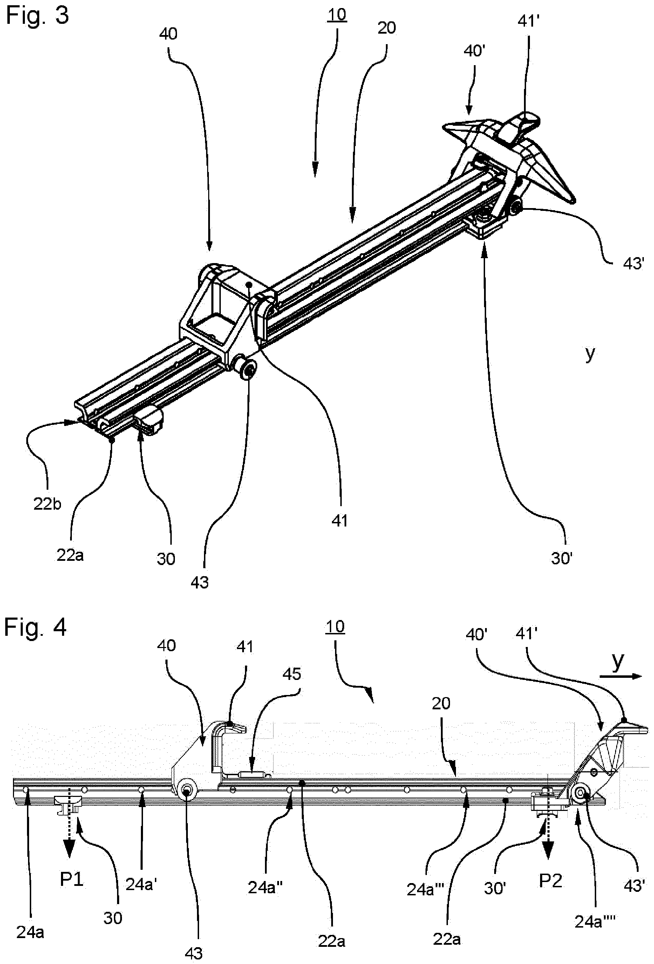

In unmittelbarer Nachbarschaft zu den Spanten 105, 105', 105" verläuft an jeder Seite des oberen Frachtdecks 110 - parallel zu den Längsträgern 112 - ein Seitenprofil, z.B. das Z-Profil 118. Dieses Z-Profil 118 verläuft parallel zu den Längsträgern 112 und ist mit Scherträgern 107, 107' verbunden, die direkt an der Flugzeugaußenhaut 101 befestigt sind. Die Scherträger 107, 107' verlaufen jeweils zwischen zwei Spanten 105, 105', 105" in einem spitzen Winkel auf das Z-Profil 118 zu. Die Scherträger 107, 107' versteifen das Netz aus Längsträgern 112 und Querträgern 111, 111' derart, dass das obere Frachtdeck 110 Scherkräfte in erheblichem Umfang aufnehmen kann. Auf den beschriebenen Tragstrukturelementen sind erfindungsgemäß ausgestaltete Seitenführungen 10, 10', 10" angeordnet. Die Seitenführungen 10, 10' sind jeweils an zwei Befestigungspunkten P1, P2 (vgl. Fig. 4) mit den Strukturelementen verbunden. Der erste Befestigungspunkt P1 sitzt oberhalb des Z-Profils 118, der zweite Befestigungspunkt P2 oberhalb des Längsträgers 112, auf dem eine Lochschiene 114 montiert ist. Die Seitenführung 10 überbrückt also den Zwischenraum zwischen dem Z-Profil 118 und dem Längsträger 112, wobei die Befestigungsschiene 20 parallel zu dem Querträger 111 verläuft.

Die Fig. 3 bis 7 zeigen eine erfindungsgemäße Seitenführung 10 im Detail. Diese unterscheidet sich anhand einer zweiten Seitenführungsvorrichtung 40' von den Seitenführungen 10, 10', 10", die in den Fig. 1 und 2 gezeigt sind.

Die Seitenführung 10 der Fig. 3 bis 7 umfasst eine Befestigungsschiene 20, an der ein erster Befestigungssockel 30 zur Befestigung der Seitenführung 10 am ersten Befestigungspunkt P1 und ein zweiter Befestigungssockel 30' zur Befestigung am zweiten Befestigungspunkt P2 (Fig. 4) angeordnet ist.

Im oberen Bereich der Befestigungsschiene 20 befinden sich hintereinander eine erste Seitenführungsvorrichtung 40 sowie die zweite Seitenführungsvorrichtung 40'. Die Seitenführungsvorrichtungen 40, 40' unterscheiden sich in ihrer Detailausführung. So ist die erste Seitenführungsvorrichtung 40 im Wesentlichen ein verschiebbar auf der Führungsschiene 20 gelagertes Winkelprofil 41, das dazu ausgebildet ist, flächig im Profil von Containern 1 und Frachtpaletten einzugreifen und diese in Z-Richtung zu fixieren. Die zweite Seitenführungsvorrichtung 40' weist eine wesentlich schmälere Führungskralle 41' auf und ist derart ausgebildet, dass sie bei einem seitlichen Überfahren nach unten hin abklappen kann. Beide Seitenführungsvorrichtungen 40, 40' verfügen über Befestigungspins 43, 43', die über Bohrungen in den Seitenführungsvorrichtungen 40, 40' in Bohrungen 24a, 24a', 24a", 24a‴ der Befestigungsschiene 20 eingreifen.

Die Bohrungen 24a, 24a', 24a", 24a‴ geben (Festsetz-)Positionen vor, an denen die erste und/oder die zweite Seitenführungsvorrichtung 40, 40' festgesetzt werden können.

In dem beschriebenen Ausführungsbeispiel umfasst die Befestigungsschiene 20 mehr als 5 Bohrungen 24a, 24a', 24a", 24a‴, 24a"", an denen die Seitenführungsvorrichtungen 40, 40' festgesetzt werden können. Die erste Bohrung 24a ist nur wenige Zentimeter (< 3 cm) von dem hinteren Ende der Befestigungsschiene 20 vorgesehen, so dass sich die erste Seitenführungsvorrichtung 40 in eine Position bringen lässt, bei der eine von der ersten Seitenführungsvorrichtung 40 aufgespannte Führungsebene (ca. bei 4,5 cm) mit dem ersten Befestigungspunkt P1 (ca. bei 5 cm) zusammenfällt bzw. hinter diesem ist. Wenn sich die erste Seitenführungsvorrichtung 40 in dieser Position befindet, kann der verfügbare Raum auf dem oberen Frachtdeck 110 optimal ausgenutzt werden. Dies kann von Vorteil sein, wenn auf dem Frachtdeck Frachtstücke, beispielsweise ein Container 1 (vergleiche Fig. 21), gedreht wird. Auch am vorderen Ende der Befestigungsschiene 20 befindet sich eine Bohrung, nämlich die vierte Bohrung 24a"", die nur wenige Zentimeter von dem vorderen Ende der Befestigungsschiene 20 entfernt ist. In dieser vierten Bohrung 24ʺʺ steckt der Befestigungspin 43' und hält die zweite Seitenführungsvorrichtung 40' derart, dass diese nach vorne hin über die Befestigungsschiene hinaus abgeklappt werden kann. In einem bevorzugten Ausführungsbeispiel ist die Befestigungsschiene in diesem Bereich abgeschrägt.

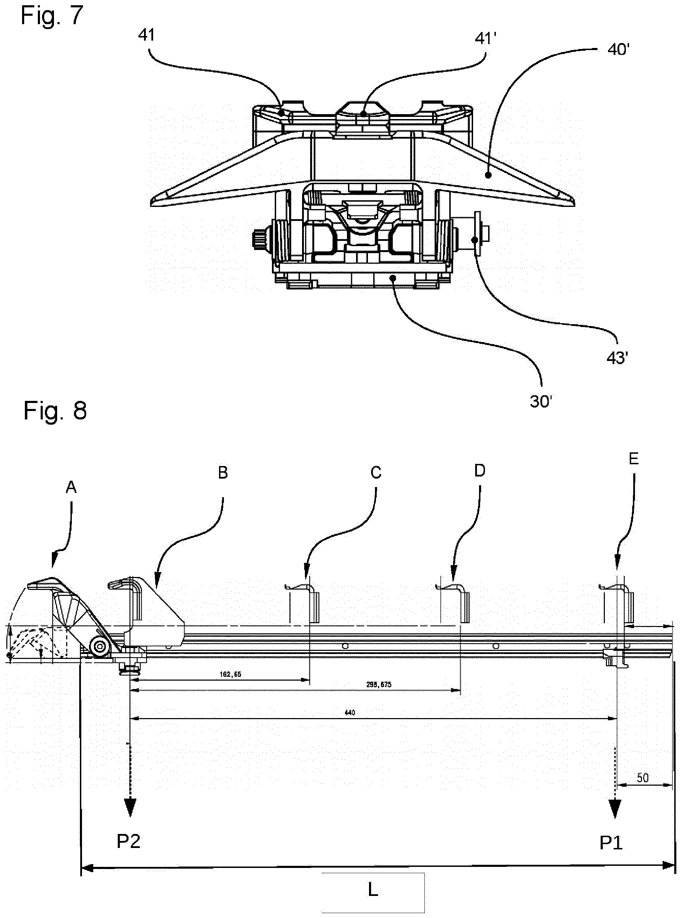

Das Abklappen der zweiten Seitenführungsvorrichtung 40' in eine Ruheposition ist schematisch in der Fig. 8 angedeutet. Die Fig. 8 zeigt weiterhin die erste Seitenführungsvorrichtung 40, die in unterschiedlichen Rastpositionen B, C, D, E festgesetzt ist. In der Rastposition A befindet sich die zweite Seitenführungsvorrichtung 40'. Die Fig. 8 enthält auch Millimeter-Angaben, die jeweils eine Distanz zwischen der durch die erste Seitenführungsvorrichtung 40 in der jeweiligen Position vorgegebenen Führungsebene und dem ersten bzw. Fixierpunkt P1 bzw. P2 angeben.

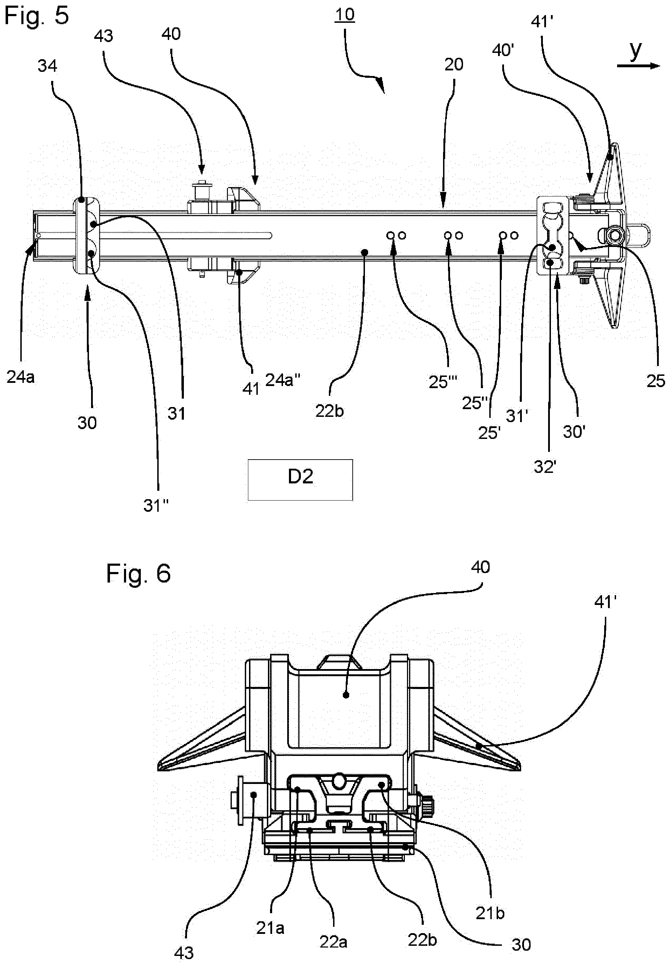

Wie anhand der Fig. 6 ersichtlich, hat die Befestigungsschiene 20 einen Querschnitt, der im Wesentlichen einem X entspricht, wobei die Enden des X parallel zueinander verlaufen. Letztendlich ergeben sich im oberen Bereich eine linke und eine rechte obere Eingriffsleiste 21a bzw. 21b. Im unteren Bereich ist eine linke und eine rechte untere Eingriffsleiste 22a bzw. 22b vorgesehen. Wie anhand der Fig. 6 ersichtlich, umgreift die erste Befestigungsvorrichtung die oberen Eingriffsleisten 21a, 21b und stellt so einen Formschluss bereit, der es ermöglicht, die erste Befestigungsvorrichtung nach Art eines Schlittens auf der Befestigungsschiene 20 in Längsrichtung v hin- und herzuschieben. Der Formschluss ermöglicht es, Kräfte, die in z-Richtung des Flugzeugs wirken, über die Befestigungsschiene 20 in das Frachtdeck einzuleiten.

Wie anhand der Fig. 4 ersichtlich, kann die erste Seitenführungsvorrichtung 40 über eine Führungsrolle 45 verfügen, die derart an der ersten Seitenführungsvorrichtung 40 befestigt ist, dass diese gemeinsam bewegt werden können. Die Rotationsachse der ersten Führungsrolle 45 verläuft parallel zur Längsrichtung v der Seitenführung 10.

Die zweite Seitenführungsvorrichtung 40' kann entsprechend der ersten Seitenführungsvorrichtung 40 derart ausgebildet sein, dass sich auch diese entlang der Befestigungsschiene 20 verschieben lässt. Alternativ kann die zweite Seitenführungsvorrichtung 40' einfach mittels des Befestigungspins 43' an vordefinierten Positionen der Befestigungsschiene 20 festgesetzt werden.

Wie bereits erläutert, verfügt die Seitenführung 10 über den ersten Befestigungssockel 30 (hinten) und den zweiten Befestigungssockel 30' (vorne). Wie ebenfalls anhand der Fig. 6 ersichtlich, umgreift auch der erste Befestigungssockel 30 die Befestigungsschiene 20, wobei ein Formschluss zu der unteren ersten und zweiten Eingriffsleiste 22a, 22b hergestellt wird. Weiterhin ist noch an der Unterseite (vergleiche Fig. 5) der Befestigungsschiene 20 eine Führungsnut 27 in der hinteren Hälfte der Befestigungsschiene 20 vorgesehen. Diese Führungsnut 27 hat Hinterschneidungen, so dass, wie aus der Fig. 6 ersichtlich, ein T-Trägerfortsatz des ersten Befestigungssockels 30 eingreifen kann. Insofern werden z-Kräfte an mehreren Kontaktflächen übergeben. Der erste Befestigungssockel 30 lässt sich im hinteren Bereich der Befestigungsschiene 20 hin und her verschieben.

Theoretisch ist es denkbar, weitere Befestigungsmittel vorzusehen, um den ersten Befestigungssockel 30 an bestimmte Positionen relativ zur Befestigungsschiene 20 festzusetzen. In dem beschriebenen Ausführungsbeispiel der Erfindung wird auf solche Befestigungsmittel jedoch verzichtet, so dass der erste Befestigungssockel 30 theoretisch auch in installiertem Zustand der Seitenführung 10 (vergleiche Figur 1) beweglich gelagert ist.

Der zweite Befestigungssockel 30' kann in korrespondierender Art und Weise an der Befestigungsschiene 20 angeordnet sein. In dem in den Fig. 3 bis 7 gezeigten Ausführungsbeispiel unterscheidet sich der Befestigungsmechanismus des zweiten Befestigungssockels 30' deutlich. So lässt sich der zweite Befestigungssockel 30' mit zwei hierfür vorgesehenen Führungszapfen von unten in korrespondierende Befestigungssockelbohrungen 25, 25', 25", 25‴ der Befestigungsschiene 20 einbringen. Somit ist der zweite Befestigungssockel 30' in Längsrichtung v gegenüber der Befestigungsschiene 20 fixiert. An der Oberseite des zweiten Befestigungssockels 30' lassen sich abnehmbar Eingriffselemente montieren, die die unteren Eingriffsleisten 22a, 22b umgreifen, so dass auch über den zweiten Befestigungssockel 30' z-Kräfte abgeleitet werden können.

Sowohl der erste Befestigungssockel 30 als auch der zweite Befestigungssockel 30' sind dazu ausgebildet, in Lochschienen 114 bzw. in Lochschienensegmenten 61 angeordnet zu werden.

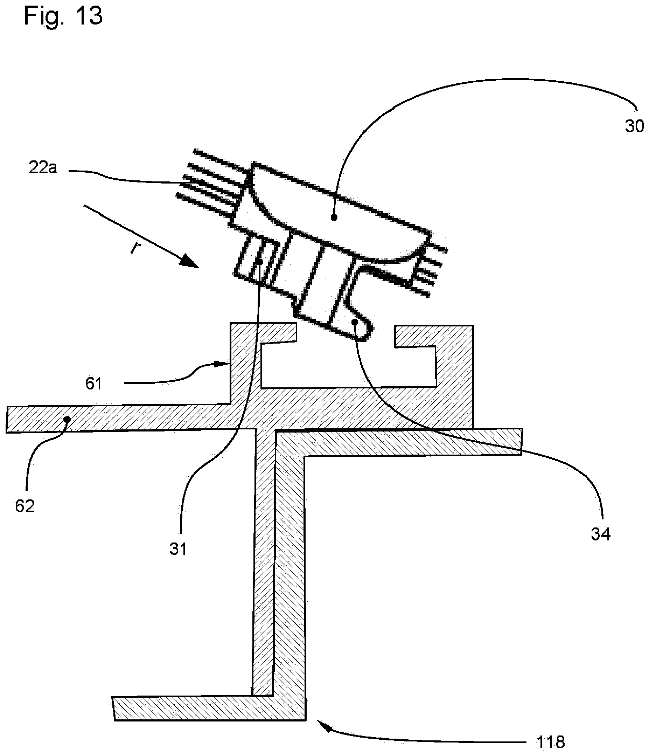

Der erste Befestigungssockel 30 verfügt über eine Leiste 34, die sich, wie anhand der Fig. 13 ersichtlich, schräg in eine Lochschiene 114 bzw. in ein Lochschienensegment 61 einbringen lässt. Sobald die Leiste 34 in das Lochschienensegment 61 eingebracht ist, kann die Seitenführung 10 zusammen mit dem ersten Befestigungssockel 30 und ggf. mit dem zweiten Befestigungssockel 30' nach unten geklappt werden, wobei der der Leiste 34 gegenüberliegende Lochzapfen 31 in korrespondierende Löcher des Lochschienensegments 61 eingreift. Somit sorgt die Leiste 34 im angebrachten Zustand dafür, dass z-Kräfte abgegeben werden können. Die Lochzapfen 31 sichern die Seitenführung gegen eine Querverschiebung in Längsrichtung (x-Richtung des Flugzeugs).

In dem in Fig. 5 gezeigten Ausführungsbeispiel sind zwei vollständige Lochzapfen 31 vorgesehen.

Es ist möglich, die Anzahl der vorhandenen Lochzapfen erfindungsgemäß zu variieren. In einer Minimalausführung ist lediglich ein Lochzapfen 31 vorgesehen. Theoretisch können auch mehr als nur zwei vollständige Lochzapfen 31 vorhanden sein. Die in Fig. 5 gezeigten vollständigen Lochzapfen haben in einer Ansicht von unten die Form eines Halbkreises.

Der zweite Befestigungssockel 30' verfügt ebenfalls über zwei Lochzapfen 31', die von oben in eine korrespondierende Lochschiene eingebracht werden können. Auch diese Lochzapfen 31' sind dazu ausgebildet, eine Querverschiebung in der Lochschiene 114 bzw. in einem Lochschienensegment 61 zu verhindern. Zur Aufnahme von z-Kräften sind seitlich an den Lochzapfen 31' Sperrelemente 32' vorgesehen, die sich aus einer Ruheposition in eine Sperrposition drehen lassen, in der der zweite Befestigungssockel 30' in die Lochschiene 114 so eingreift, dass auch z-Kräfte abgeleitet werden können.

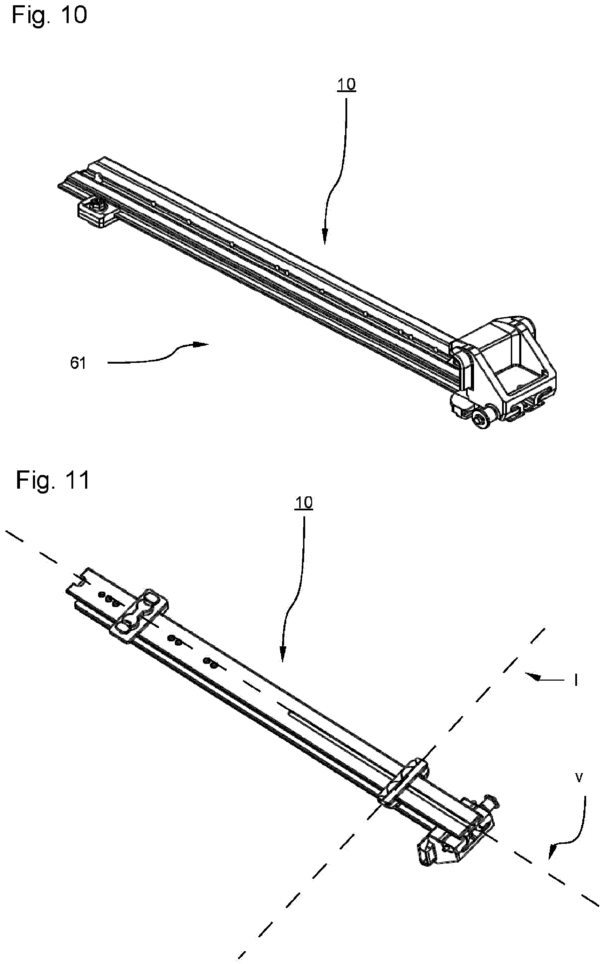

In einer Ausführungsform lässt sich die Seitenführung 10, wie sie anhand der Fig. 3 bis 7 beschrieben wurde, sowie die Seitenführung 10, die aus den Fig. 10 und 11 ersichtlich ist, in schräg verlaufenden Lochschienensegmenten 61 und/oder in schräg verlaufenden Lochschienen 114 anordnen. In dieser Konstellation bedeutet "schräg verlaufend", dass die jeweilige Lochschiene 114 nicht parallel zur Längsrichtung (x-Richtung) des Flugzeugs verläuft. In einem bevorzugten Ausführungsbeispiel verläuft die Befestigungsschiene 20 trotz der schräg verlaufenden Lochschienen 114 bzw. Lochschienensegmente 61 parallel zur Querrichtung des Flugzeugs (y-Richtung).

Erfindungsgemäß wird ein entsprechendes Anordnen der Seitenführung 10 dadurch ermöglicht, dass ein Verdrehen des ersten und/oder des zweiten Befestigungssockels 30, 30' gegenüber der Längsrichtung v der Befestigungsschiene 20 möglich ist.

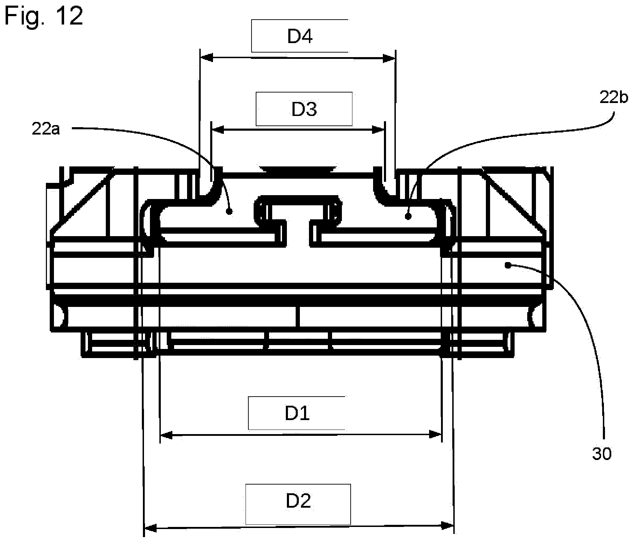

Die Fig. 11 zeigt exemplarisch den ersten Befestigungssockel 30 in einer Grundstellung, bei der die Längsrichtung v der Befestigungsschiene 20 mit einer durch das Zapfenprofil des ersten Befestigungssockels 30 vorgegebenen Lochschienenachse I einen rechten Winkel bilden. In dem Ausführungsbeispiel lässt sich der erste Befestigungssockel 30 gegenüber dieser Grundstellung um ±15° verdrehen. Hierfür ist, wie anhand der Fig. 12 ersichtlich, ein gewisses (Seiten-)Spiel im Formschluss zwischen der Befestigungsschiene 20 und dem ersten Befestigungssockel 30 vorgesehen. Das Spiel ergibt sich dadurch, dass die Schienenbreite zumindest im unteren Bereich (vergleiche untere Eingriffsleisten 22a, 22b) eine Schienenbreite D1 hat, die kleiner ist als eine erste lichte Weite D2 des Befestigungssockels. Zusätzlich ist die Sockelbreite D3 kleiner als die zweite lichte Weite D4 des ersten Befestigungssockels 30. Auch das T-Profil ist von der Führungsnut 27 entsprechend beabstandet. In absoluten Werten kann sich die Differenz auf bis 7 mm, vorzugsweise 2 bis 6 mm, belaufen.

In einem Ausführungsbeispiel entspricht die Schienenbreite D1 im Wesentlichen der ersten lichten Weite D2 und/oder die Sockelbreite D3 entspricht im Wesentlichen der zweiten lichten Weite D4. Eine Verdrehbarkeit, z.B. um 10° bis 15°, kann in dieser Konstellation dadurch erreicht werden, dass die Innenwände des ersten und/oder zweiten Befestigungssockels 30, 30' zumindest abschnittsweise eine konvexe Form aufweisen. Vorzugsweise liegt diese konvexe Form der Innenwände dort vor, wo die Innenwände vertikal an Abschnitten der Befestigungsschiene 20, insbesondere der Eingriffsleisten 22a, 22b, anliegen und/oder entsprechenden Vertikalabschnitten an der Befestigungsschiene 20 mit einem sehr geringen Spiel zugewandt sind.

In relativen Werten kann die Differenz im Intervall von 1 bis 20, insbesondere im Intervall von 5 bis 15%, liegen. Erfindungsgemäß ist es möglich, lediglich den ersten Befestigungssockel 30 oder lediglich den zweiten Befestigungssockel 30' mit einem entsprechenden Spiel auszustatten. In einer bevorzugten Ausführungsform weisen beide Befestigungssockel 30, 30' ein entsprechendes Spiel auf.

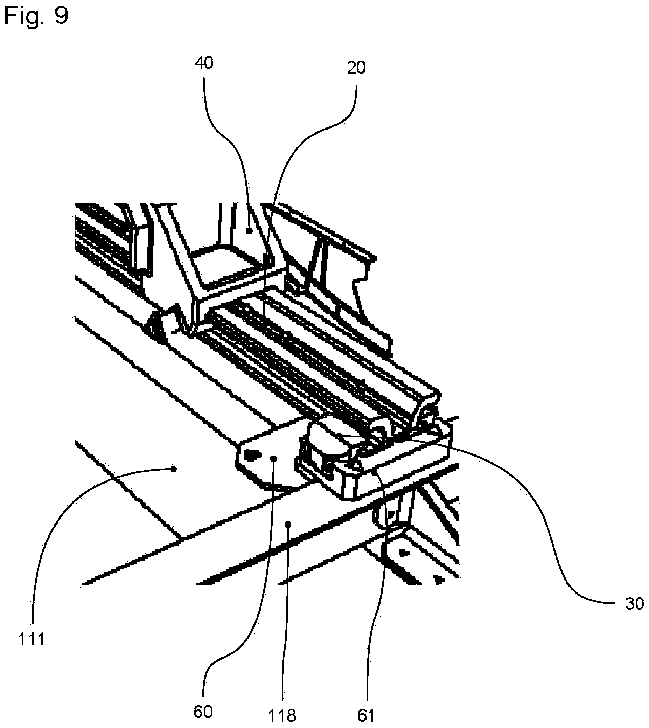

Wie bereits erläutert, wird der erste Befestigungssockel 30 vorzugsweise über ein Fitting 60 (vergleiche die Fig. 9 und 12) mit dem Z-Profil 118 des Flugzeugs verbunden. Ein entsprechendes Fitting kann im Zuge der Umrüstung eines Passagierflugzeugs zu einem Frachtflugzeug mit dem Z-Profil 118 verschraubt oder vernietet werden. Die Fig. 13 zeigt einen Querschnitt durch ein entsprechendes Fitting 60, wobei das Fitting in seinem unteren Bereich einen Winkel aufweist, um flächig an dem Z-Profil 118 anzuliegen. Im oberen Bereich ist das Lochschienensegment 61 vorgesehen. Dieses kann je nach Ausgestaltung der Seitenführungen 10 bzw. des ersten Befestigungssockels 30 über ein Loch, zwei Löcher oder drei Löcher verfügen. Theoretisch ist es auch denkbar, mehr als drei Löcher vorzusehen. Die in Fig. 13 gezeigte Ausführungsform umfasst einen Fortsatz 62, auf der Paneele zur Ausbildung einer begehbaren Fläche des Frachtdecks angeordnet werden können.

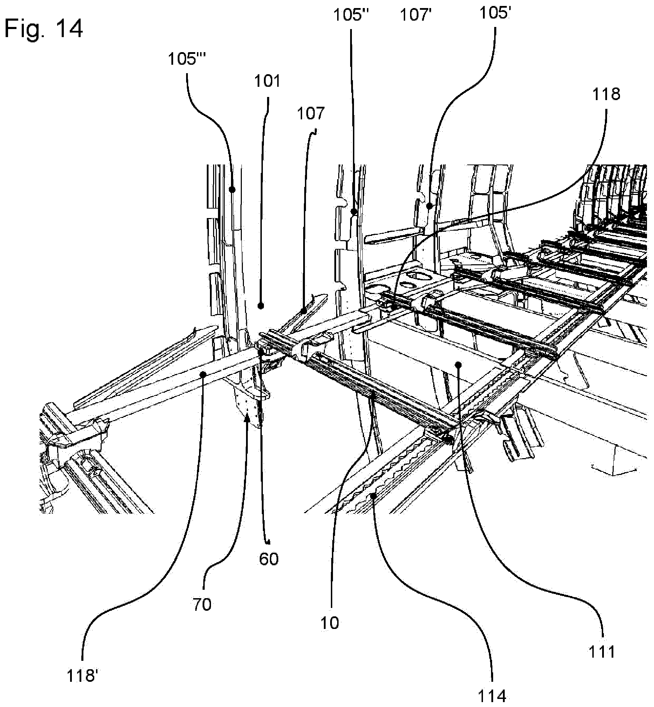

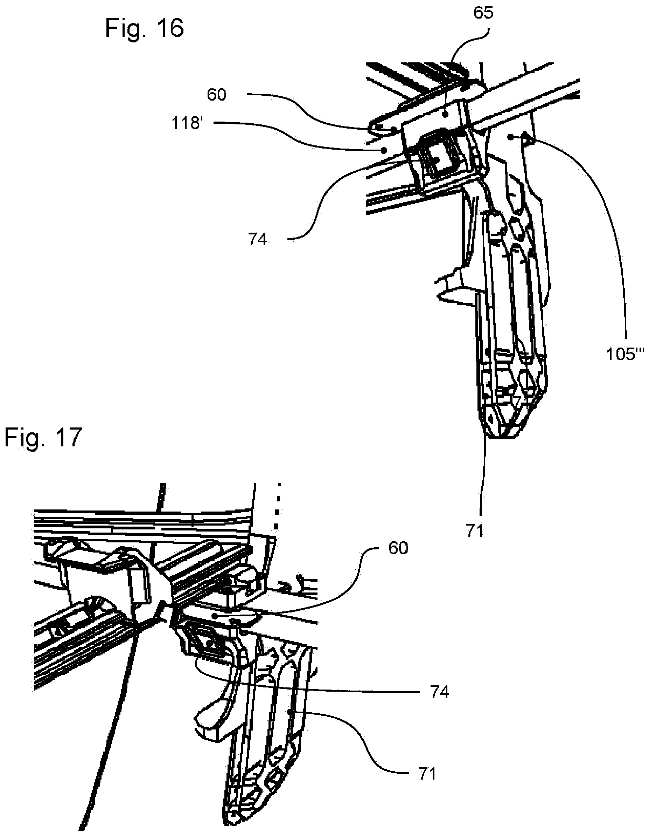

Die Fig. 14 bis 20 erläutern ein weiteres Ausführungsbeispiel des Fittings 60, wie dieses schematisch in Fig. 13 gezeigt ist. So gibt es Bereiche im Flugzeug, an denen das Seitenprofil nicht als Z-Profil 118, sondern eher als eine Art Kastenprofil 118' ausgebildet ist. Die Fig. 14 zeigt eine Ansicht eines Frachtdecks, bei dem das Seitenprofil von einem Z-Profil 118 in das Kastenprofil 118' übergeht. Der Übergang findet im Wesentlichen bei der Spante 105" statt. Diese besonderen Bereiche befinden sich in dem Bereich des Frachtdecks, in dem sich auch der Flügelkasten befindet. Hier müssen die Seitenprofile gegenüber den Spanten 105", 105‴ bewegbar angeordnet sein.

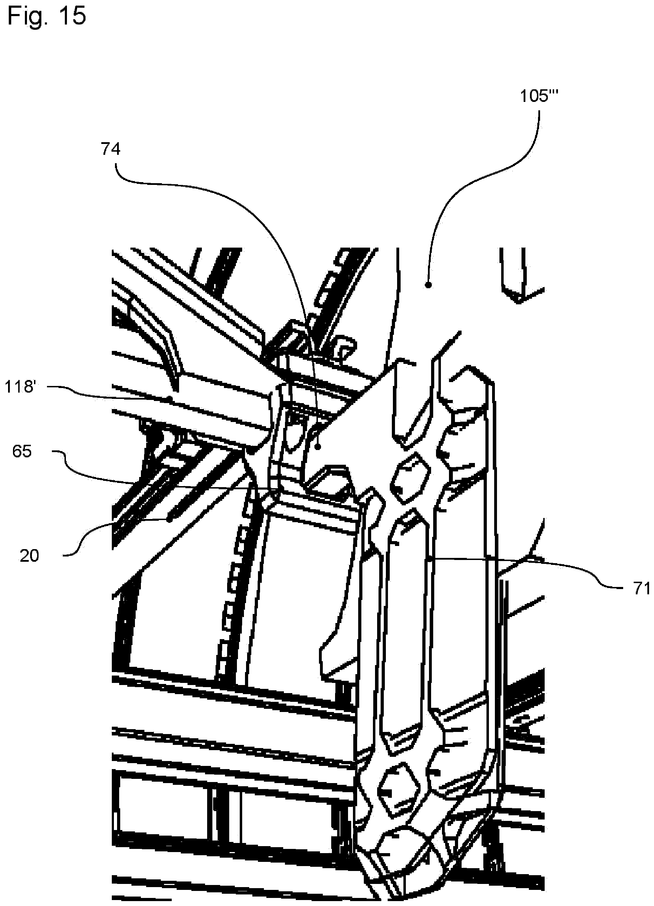

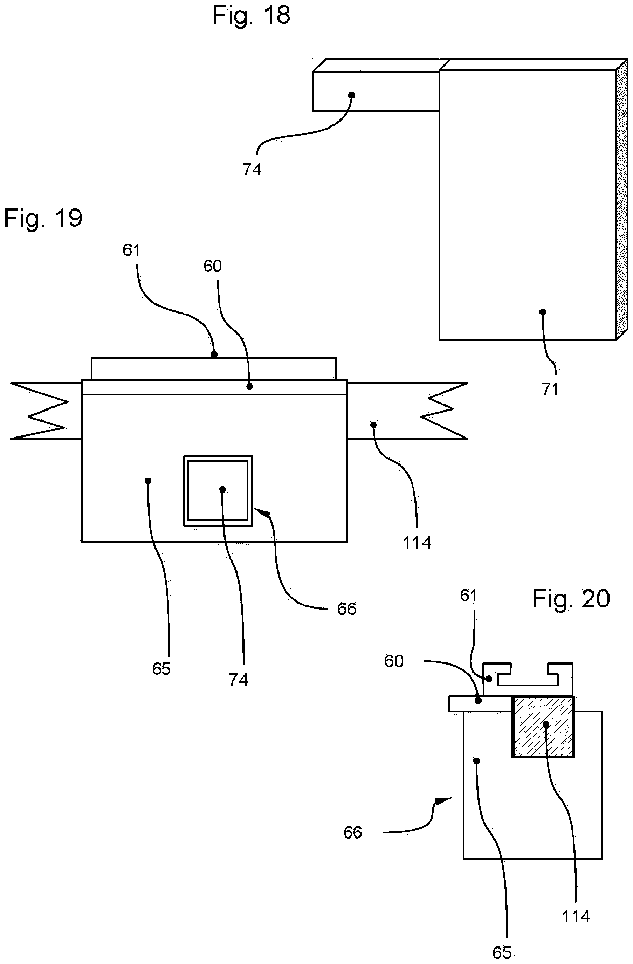

Die in den Fig. 15 bis 20 gezeigte Ausführungsform des Fittings 60 ermöglicht eine entsprechende Bewegung in Querrichtung des Flugzeugs (y-Richtung), wobei Kräfte, die in x- oder in z-Richtung wirken, in die Spanten, insbesondere in den Spanten 105"', abgeleitet werden. Hierfür ist ein Träger 70 mit dessen Befestigungskörper 71 an dem Spanten 105‴ befestigt. Der Träger 70 verfügt über eine Trägernase 74, die entlang der Querrichtung des Flugzeugs in den Innenraum des Flugzeugs hineinragt. Die Trägernase 74 wird von einem Schlitten 65 aufgenommen. Hierfür ist eine Aufnahme 66 vorgesehen, die bevorzugt formschlüssig in z-Richtung sowie in x-Richtung an der Trägernase 74 anliegt. In y-Richtung erlaubt sie eine Relativbewegung der Trägernase 74 relativ zu dem Schlitten 65. Der Schlitten 65 umgreift, wie insbesondere anhand der Fig. 20 ersichtlich, das Kastenprofil 118' und ist mit dem Fitting 60 fest verschraubt. Eine Bewegung des Kastenprofils 118' relativ zum Schlitten 65 ist nicht vorgesehen.

Erfindungsgemäß ist es nicht zwangsläufig notwendig, dass der Träger 70 mit dem Befestigungskörper 71 seitlich an einem Spant angeschraubt ist. Stattdessen kann der Befestigungskörper 71 Auskragungen eines Spants umgreifen und so einen Formschluss zum Spant herstellen. Weiterhin ist es möglich den Befestigungskörper 71 an in einer in diesem Bereich vorhandenen Basis des Spants anzubringen oder den Befestigungskörper unmittelbar oder mittelbar mit dem Flügelmittelkasten zu verbinden. Dies hat den Vorteil, dass hohe Kräfte schonend in diese Struktur des Flugzeugs eingeleitet werden können.

Fig. 21 zeigt einen Schnitt durch den Rumpf eines Flugzeugs. In dem Schnitt sind das obere und das untere Frachtdeck 110 bzw. 120 gezeigt. Auf dem oberen Frachtdeck 110 befindet sich der Container 1, der gegenüber dem Zentrum des Frachtdecks 110 leicht versetzt (in der Bildebene nach links) angeordnet ist. Die erfindungsgemäßen Seitenführungen 10, 10', 10" ermöglichen auf Grund der Verschiebbarkeit der Seitenführungsvorrichtungen 40, 40' eine entsprechende versetzte Anordnung. Diese Anordnung hat neben der optimalen Ausnutzung des Frachtdecks den Vorteil, dass auch Gefahrengüter, die während des Flugs kontrolliert werden müssen, transportiert werden können.

Wie in der Figur angedeutet bleiben für das Personal begehbare Bereiche frei.

### Bezugszeichenliste

- 1: Container
- 10, 10', 10": Seitenführung
- 20: Befestigungsschiene
- 21a, 21b: Obere Eingriffsleiste
- 22a, 22b: Unteres Eingriffsleiste
- 24a, 24a', 24a", 24a‴, 24a"": Bohrung
- 25, 25', 25", 25‴: Befestigungssockelbohrung
- 27: Führungsnut
- 30, 30': Befestigungssockel
- 31, 31', 31": Lochzapfen
- 32': Sperrelement
- 34: Leiste

- 40, 40': Seitenführungsvorrichtung
- 41: Winkelprofil
- 41': Führungskralle
- 43, 43': Befestigungspin
- 44: Schwenkachse
- 45: Führungsrolle
- 47: erster Führungsschlitten
- 48, 48': Schrägflächen
- 49, 49': Federlager

- 60: Fitting
- 61: Lochschienensegment
- 62: Fortsatz
- 65: Schlitten
- 66: Aufnahme
- 70: Träger
- 71: Befestigungskörper
- 74: Trägernase
- 100: Flugzeug
- 101: Außenhaut
- 105, 105', 105",105‴: Spanten
- 107, 107': Scherträger
- 110: Oberes Frachtdeck
- 111, 111': Querträger
- 112: Längsträger
- 114: Lochschiene
- 118: Z-Profil
- 118': Kastenprofil
- 120: Unteres Frachtdeck
- v: Längsrichtung der Befestigungsschiene
- I: Lochschienenachse
- A, B, C, D: Rastpositionen
- D1: Schienenbreite
- D2: erste lichte Weite des Adapters
- D3: Sockelbreite
- D4: zweite lichte Weite des Adapters
- L: Schienenlänge

## Patentansprüche

1. Seitenführung (10, 10', 10") zum Führen und/oder Halten von Frachtstücken, insbesondere Containern (1) und/oder Paletten, in einem Flugzeug, umfassend:
- eine sich in Längsrichtung (v) erstreckende Befestigungsschiene (20);
- mindestens eine Seitenführungsvorrichtung (40, 40'), die in Längsrichtung (v) an unterschiedlichen Positionen (A, B, C, D) an der Befestigungsschiene (20) befestigbar ist, **dadurch gekennzeichnet, dass**:
die Seitenführung (10, 10', 10") mindestens eine erste und mindestens eine zweite Befestigungsvorrichtung (30, 30') zur Befestigung der Seitenführung (10, 10', 10") in einer jeweiligen Lochschiene (61, 114) auf einem Frachtdeck (110) des Flugzeugs umfasst; und dadurch, dass mindestens die erste Befestigungsvorrichtung (30, 30') die Befestigungsschiene (20) derart umgreift und/oder in die Befestigungsschiene (20) eingreift, dass die erste Befestigungsvorrichtung (30, 30') in Längsrichtung (v) relativ zur zweiten Befestigungsvorrichtung (30, 30') verschiebbar ist, um die Seitenführung (10, 10', 10") auf unterschiedliche relative Abstände der Lochschienen (61, 114) einzustellen.

2. Seitenführung nach Anspruch 1,
**dadurch gekennzeichnet, dass**
die Befestigungsschiene (20) im Wesentlichen einen Querschnitt eines Doppel-T-Trägers hat, wobei mindestens eine der Befestigungsvorrichtungen (30, 30') einen unteren Teil des Doppel-T-Trägers umgreift, und/oder die mindestens eine Seitenführungsvorrichtung (40, 40') einen oberen Teil des Doppel-T-Trägers umgreift.

3. Seitenführung (10, 10', 10") nach einem der vorhergehenden Ansprüche, **dadurch gekennzeichnet, dass**
mindestens eine der Befestigungsvorrichtungen (30, 30') über einen Formschluss mit Spiel derart an der Befestigungsschiene (20) befestigt ist, dass die Befestigungsschiene (20) aus einer optional rechtwinkligen Grundstellung gegenüber der Befestigungsvorrichtung (30, 30) um mindestens 10 Grad oder um mindestens 20 Grad verdrehbar ist.

4. Seitenführung (10, 10', 10") nach einem der vorhergehenden Ansprüche, **dadurch gekennzeichnet, dass**
die Seitenführungsvorrichtung (40, 40') in Längsrichtung (v) verschiebbar an der Befestigungsschiene (20) gelagert ist.

5. Seitenführung (10, 10', 10") nach einem der vorhergehenden Ansprüche, **dadurch gekennzeichnet, dass**
mindestens eine Führungsrolle (45) in der Befestigungsschiene (20) um eine Rotationsachse drehbeweglich gelagert ist, wobei die Führungsrolle (45) derart, vorzugsweise mit der Seitenführungsvorrichtung (40, 40'), verschiebbar und/oder versetzbar angeordnet ist, dass die Rotationsachse im Wesentlichen parallel zur Längsrichtung (v) verläuft.

6. Seitenführung (10, 10', 10") nach einem der vorhergehenden Ansprüche, **gekennzeichnet durch**
mindestens eine Festsetzvorrichtung, insbesondere einen Fixierungszapfen (43, 43'), zum Festsetzen der mindestens einen Seitenführungsvorrichtung (40, 40') an den unterschiedlichen Positionen (A, B, C), wobei die Befestigungsschiene (20) vorzugsweise Bohrungen (24a, 24a', 24a", 24a‴, 24a"") zur Aufnahme des Fixierungszapfens (43, 43') umfasst.

7. Seitenführung (10, 10', 10") nach einem der vorhergehenden Ansprüche, **dadurch gekennzeichnet, dass**
die Befestigungsschiene (20) eine Breite (D1) von maximal 10 cm, insbesondere von maximal 8 cm, und/oder eine Schienenlänge (L) von mindestens 15, 20 oder 30 cm hat.

8. Seitenführung (10, 10', 10") nach einem der vorhergehenden Ansprüche,
**gekennzeichnet durch**
mindestens zwei Seitenführungsvorrichtungen (40, 40'), wobei eine der Seitenführungsvorrichtungen (40') einen Anschlag und/oder eine Riegelkralle (41, 41') umfasst, der bzw. die derart an der Befestigungsschiene (20) befestigt ist, dass der Anschlag bzw. die Riegelkralle (41, 41') von einer hochgestellten Arbeitsposition in eine abgesenkte Ruheposition verschwenkbar ist, wobei der Anschlag bzw. die Riegelkralle (41, 41') um eine Schwenkachse drehbeweglich an der Befestigungsschiene (20) befestigt ist.

9. Seitenführung (10, 10', 10") nach Anspruch 8,
**dadurch gekennzeichnet, dass**
der Anschlag bzw. die Riegelkralle (41, 41') auf mindestens einer Seite Schrägflächen aufweist, die zur Bewegung des Anschlags bzw. der Riegelkralle (41, 41') aus der Arbeitsposition in die Ruheposition beim Überfahren durch ein Frachtstück in einer Richtung ausgebildet sind, wobei die Richtung ungleich einer Halterichtung des Anschlags bzw. der Riegelkralle (41, 41') ist.

10. Seitenführung (10, 10', 10") nach einem der vorhergehenden Ansprüche,
**dadurch gekennzeichnet, dass**
mindestens eine der Befestigungsvorrichtungen (30, 30') eine Leiste (34) zum Einführen der Befestigungsvorrichtung (30, 30') in eine Lochschiene (61, 114) entlang einer Einbringrichtung (r) und mindestens einen der Leiste (34) gegenüberliegenden Zapfen (31, 31') zum Sichern der Befestigungsvorrichtung (30, 30') gegen einen Verschub quer zur Einbringrichtung (r) aufweist.

11. Seitenführungsgruppe, umfassend eine Vielzahl von Seitenführungen (10, 10', 10") gemäß einem der vorhergehenden Ansprüche,
wobei die Seitenführungsvorrichtungen (40, 40') mindestens eine Profilschiene umfassen, die verschiebbar an mindestens zwei Befestigungsschienen (20) gelagert ist.

12. Frachtladedeck mit mindestens einer Seitenführungsgruppe gemäß dem Anspruch 11 und/oder mit mindestens einer Seitenführung (10, 10', 10") gemäß einem der Ansprüche 1 bis 10.

13. Flugzeug mit einem Frachtladedeck (110, 120), insbesondere nach Anspruch 12, wobei das Flugzeug die nachfolgenden Tragstrukturelemente (101, 105, 105', 105", 105‴, 107, 107', 111, 111', 112, 118) umfasst:
- Flugzeugaußenhaut (101),
- mit der Flugzeugaußenhaut (101) verbundene Spanten (105, 105', 105", 105‴);
- an den Spanten (105, 105', 105", 105‴) befestigte Querträger (111, 111');
- an den Querträgern (111, 111') befestigte Längsträger (112);
- parallel zu den Längsträgern (112) verlaufende Seitenprofile, insbesondere Z-Profile (118), die über Scherträger (107, 107') (unmittelbar) mit der Flugzeugaußenhaut (101) verbunden sind;
**gekennzeichnet durch**
- mindestens eine Seitenführung (10, 10', 10") nach einem der Ansprüche 1 bis 10, wobei die Seitenführung (10, 10', 10") umfasst:
- eine sich in Querrichtung (y) des Flugzeugs erstreckende Befestigungsschiene (20);
- mindestens eine Seitenführungsvorrichtung (40, 40'), die an unterschiedlichen Positionen (A, B, C, D) an der Befestigungsschiene (20) befestigbar ist,
wobei die Befestigungsschiene (20) über einen ersten Befestigungspunkt (P1) und einen zweiten Befestigungspunkt (P2) mit Tragstrukturelementen (112, 118) des Flugzeugs verbunden ist, wobei sich der erste Befestigungspunkt (P1) oberhalb eines der Seitenprofile und der zweite Befestigungspunkt oberhalb eines der Querträger (111, 111') befindet.

14. Flugzeug nach Anspruch 13,
**dadurch gekennzeichnet, dass**
mindestens eine Seitenführung (10, 10', 10") im Bereich des Flügelmittelkastens angeordnet ist, wobei diese Seitenführung (10, 10', 10") an einem/dem ersten Befestigungspunkt (P1) mit einem Schlitten (65) und an einem/dem zweiten Befestigungspunkt (P2) mit einem der Querträger (111, 111') verbunden ist, wobei der Schlitten (65) in Querrichtung (y) des Flugzeugs beweglich auf einem Vorsprung (74) sitzt, der mit einem der Spanten (105, 105', 105", 105‴) und/oder einem Flügelmittelkasten verbunden ist.

15. Flugzeug nach Anspruch 13 oder 14,
**dadurch gekennzeichnet, dass**
der Schlitten (65) eine sich in Querrichtung (y) des Flugzeugs erstreckende Aufnahme (66) aufweist, in die der sich, vorzugsweis in Querrichtung (y) erstreckende, Vorsprung (74) (formschlüssig) eingreift.

## Claims

1. A lateral guide (10, 10', 10") for guiding and/or holding freight packages, in particular containers (1) and/or pallets, in an aircraft, comprising:
- a fastening rail (20) extending in the longitudinal direction (v);
- at least one lateral guide device (40, 40') attachable to the fastening rail (20) in the longitudinal direction (v) at various positions (A, B, C, D),
**characterized in that**:
the lateral guide (10, 10', 10") comprises at least one first and at least one second fastening device (30, 30') for attaching the lateral guide (10, 10', 10") in a respective perforated rail (61, 114) on a freight deck (110) of the aircraft; and **in that**
at least the first attachment device (30, 30') encompasses the fastening rail (20) and/or engages into the fastening rail (20) in such a manner that the first fastening device (30, 30') is displaceable in the longitudinal direction (v) relative to the second fastening device (30, 30') so as to adjust the lateral guide (10, 10', 10") to different relative spacings of the perforated rails (61, 114).

2. The lateral guide according to claim 1,
**characterized in that**
the fastening rail (20) substantially has a cross-section of a double T beam, wherein at least one of the fastening devices (30, 30') encompasses a lower part of the double T beam, and/or the at least one lateral guide device (40, 40') encompasses an upper part of the double T beam.

3. The lateral guide (10, 10', 10") according to any one of the preceding claims, **characterized in that**
at least one of the fastening devices (30, 30') is attached to the fastening rail (20) via a positive fit with a free play such that the fastening rail (20), from an optionally rectangular initial position, can be rotated with respect to the fastening device (30, 30') by at least 10 degrees or by at least 20 degrees.

4. The lateral guide (10, 10', 10") according to any one of the preceding claims, **characterized in that**
the lateral guide device (40, 40') is mounted to the fastening rail (20) to be displaceable in the longitudinal direction (v).

5. The lateral guide (10, 10', 10") according to any one of the preceding claims, **characterized in that**
at least one guide roller (45) is mounted in the fastening rail (20) to be rotational about an axis of rotation, wherein the guide roller (45) is arranged, preferably with the lateral guide device (40, 40'), to be displaceable and/or relocatable in such a manner that the axis of rotation substantially runs in parallel to the longitudinal direction (v).

6. The lateral guide (10, 10', 10") according to any one of the preceding claims, **characterized by**
at least one arresting device, in particular a fixing pin (43, 43') for arresting the at least one lateral guide device (40, 40') at the various positions (A, B, C), wherein the fastening rail (20) preferably comprises bores (24a, 24a', 24a", 24a‴, 24aʺʺ) for receiving the fixing pin (43, 43').

7. The lateral guide (10, 10', 10") according to any one of the preceding claims, **characterized in that**
the fastening rail (20) has a width (D1) of a maximum of 10 cm, in particular of a maximum of 8 cm and/or a rail length (L) of at least 15, 20 or 30 cm.

8. The lateral guide (10, 10', 10") according to any one of the preceding claims, **characterized by**
at least two lateral guide devices (40, 40'), wherein one of the lateral guide devices (40, 40') comprises a stop and/or a locking claw (41, 41') which is attached to the fastening rail (20) in such a manner that the stop or the locking claw (41, 41') is tiltable from an elevated working position into a lowered rest position, wherein the stop or the locking claw (41, 41') it attached to the fastening rail (20) to be rotationally movable about a pivot axis.

9. The lateral guide (10, 10', 10") according to claim 8,
**characterized in that**
the stop or the locking claw (41, 41') has inclined surfaces at least on one side, which are formed for moving the stop or the locking claw (41, 41') from the working position into the rest position when being passed over by a freight package in one direction, wherein the direction is unequal to a holding direction of the stop or the locking claw (41, 41').

10. The lateral guide (10, 10', 10") according to any one of the preceding claims, **characterized in that**
at least one of the fastening devices (30, 30') has a bar (34) for inserting the fastening device (30, 30') into a perforated rail (61, 114) along an insertion direction (r), and at least one pin (31, 31') opposite the bar (34) for securing the fastening device (30, 30') against shifting transversely to the insertion direction (r).

11. A lateral guide group, comprising a plurality of lateral guides (10, 10', 10") according to any one of the preceding claims,
wherein the lateral guide devices (40, 40') comprise at least one profile rail mounted on at least two fastening rails (20) so as to be displaceable.

12. A freight loading deck having at least a lateral guide group according to claim 11 and/or at least one lateral guide (10, 10', 10") according to any one of claims 1 to 10.

13. An aircraft having a freight loading deck (110, 120), in particular according to claim 12, wherein the aircraft comprises the following carrier structure elements (101, 105, 105', 105", 15‴, 105ʺʺ, 107, 107', 111, 111', 112, 118):
- an aircraft outer skin (101),
- frames (105, 105', 105", 105‴) connected with the aircraft outer skin (101);
- cross beams (111, 111') attached to the frames (105, 105', 105", 105‴);
- longitudinal beams (112) attached to the cross beams (111, 111');
- lateral profiles, in particular Z profiles (118), running in parallel to the longitudinal beams (112), which lateral profiles are (directly) connected with the aircraft outer skin (101) via shearing beams (107, 107'); **characterized by**
- at least one lateral guide (10, 10', 10") according to any one of claims 1 to 10, wherein the lateral guide (10, 10', 10") comprises:
- a fastening rail (20) extending in the transverse direction (y) of the aircraft;
- at least one lateral guide device (40, 40') attachable to the fastening rail (20) at various positions (A, B, C, D),
wherein the fastening rail (20) is connected with carrier structure elements (112, 118) of the aircraft via a first fastening point (P1) and a second fastening point (P2), wherein the first fastening point (P1) is located above one of the lateral profiles, and the second fastening point is located above one of the cross beams (111, 111').

14. The aircraft according to claim 13,
**characterized in that**
at least one lateral guide (10, 10', 10") is arranged in the area of the centre wing box, wherein said lateral guide (10, 10', 10") is connected with a slide (65) on a/the first fastening point (P1) and with one of the cross beams (111, 111') on a/the second fastening point (P2), wherein the slide (65) seated on a protrusion (74) so as to be movable in the transverse direction (y) of the aircraft, which protrusion is connected with one of the frames (105, 105', 105", 105‴) and/or a centre wing box.

15. The aircraft according to claim 13 or 14,
**characterized in that**
the slide (65) has a receptacle (66) extending in the transverse direction (y) of the aircraft, into which the protrusion (74) preferably extending in the transverse direction (y) of the aircraft engages (in a positive fit).

## Revendications

1. Guidage latéral (10, 10', 10") destiné à guider et/ou maintenir des éléments de fret, en particulier des conteneurs (1) et/ou des palettes, dans un aéronef, comprenant :
- un rail de fixation (20) s'étendant en direction longitudinale (v) ;
- au moins un dispositif de guidage latéral (40, 40') qui peut être fixé au rail de fixation (20) dans différentes positions (A, B, C, D) en direction longitudinale (v),
**caractérisé en ce que** :
le guidage latéral (10, 10', 10") comprend au moins un premier et au moins un deuxième dispositif de fixation (30, 30') destinés à fixer le guidage latéral (10, 10', 10") dans un rail perforé (61, 114) respectif sur un pont de chargement de fret (110) de l'aéronef ; et **en ce que**
au moins le premier dispositif de fixation (30, 30') entoure le rail de fixation (20) et/ou se met en prise dans le rail de fixation (20) de telle manière que le premier dispositif de fixation (30, 30') puisse être translaté en direction longitudinale (v) par rapport au deuxième dispositif de fixation (30, 30') pour régler le guidage latéral (10, 10', 10") à différentes distances relatives des rails perforés (61, 114).

2. Guidage latéral selon la revendication 1,
**caractérisé en ce que**
le rail de fixation (20) présente sensiblement une section en coupe transversale d'une poutre à double T, sachant qu'au moins un des dispositifs de fixation (30, 30') entoure une partie inférieure de la poutre à double T, et/ou l'au moins un dispositif de guidage latéral (40, 40') entoure une partie supérieure de la poutre à double T.

3. Guidage latéral (10, 10', 10") selon l'une des revendications précédentes, **caractérisé en ce que**
au moins un des dispositifs de fixation (30, 30') est fixé au rail de fixation (20) via une complémentarité de forme avec un jeu de telle manière que le rail de fixation (20) puisse être tourné d'au moins 10 degrés ou d'au moins 20 degrés par rapport au dispositif de fixation (30, 30') à partir d'une position de base facultativement perpendiculaire.

4. Guidage latéral (10, 10', 10") selon l'une des revendications précédentes, **caractérisé en ce que**
le dispositif de guidage latéral (40, 40') est logé au niveau du rail de fixation (20) de manière translatable en direction longitudinale (v).

5. Guidage latéral (10, 10', 10") selon l'une des revendications précédentes, **caractérisé en ce que**
au moins un galet de guidage (45) est logé dans le rail de fixation (20) de manière mobile en rotation autour d'un axe de rotation, sachant que le galet de guidage (45) est disposé de manière translatable et/ou décalable, de préférence avec le dispositif de guidage latéral (40, 40'), de telle manière que l'axe de rotation soit sensiblement parallèle à la direction longitudinale (v).

6. Guidage latéral (10, 10', 10") selon l'une des revendications précédentes, **caractérisé par**
au moins un dispositif d'immobilisation, en particulier un tourillon d'arrêt (43, 43'), destiné à immobiliser l'au moins un dispositif de guidage latéral (40, 40') dans les différentes positions (A, B, C), sachant que le rail de fixation (20) comprend de préférence des alésages (24a, 24a', 24a", 24a‴, 24a"") destinés à loger le tourillon d'arrêt (43, 43').

7. Guidage latéral (10, 10', 10") selon l'une des revendications précédentes, **caractérisé en ce que**
le rail de fixation (20) a une largeur (D1) de maximum 10 cm, en particulier de maximum 8 cm, et/ou une longueur de rail (L) d'au moins 15, 20 ou 30 cm.

8. Guidage latéral (10, 10', 10") selon l'une des revendications précédentes, **caractérisé par**
au moins deux dispositifs de guidage latéral (40, 40'), sachant qu'un des dispositifs de guidage latéral (40') comprend une butée et/ou un crampon de verrouillage (41, 41') qui est fixé/e au rail de fixation (20) de telle manière que la butée ou le crampon de verrouillage (41, 41') puisse être pivoté/e d'une position de travail surélevée à une position de repos abaissée, sachant que la butée ou le crampon de verrouillage (41, 41') est fixé/e au rail de fixation (20) de manière mobile en rotation autour d'un axe de pivotement.

9. Guidage latéral (10, 10', 10") selon la revendication 8,
**caractérisé en ce que**
la butée ou le crampon de verrouillage (41, 41') présente, d'au moins un côté, des faces inclinées qui sont constituées pour déplacer la butée ou le crampon de verrouillage (41, 41') de la position de travail à la position de repos lorsqu'elles sont parcourues par un élément de fret dans une direction, sachant que la direction est inégale à une direction de maintien de la butée ou du crampon de verrouillage (41, 41').

10. Guidage latéral (10, 10', 10") selon l'une des revendications précédentes, **caractérisé en ce que**
au moins un des dispositifs de fixation (30, 30') présente une barrette (34) destinée à introduire le dispositif de fixation (30, 30') dans un rail perforé (61, 114) le long d'une direction d'insertion (r) et au moins un tourillon (31, 31') opposé à la barrette (34), destiné à assurer le dispositif de fixation (30, 30') contre une translation transversalement à la direction d'insertion (r).

11. Groupe de guidages latéraux, comprenant une pluralité de guidages latéraux (10, 10', 10") selon l'une des revendications précédentes,
sachant que les dispositifs de guidage latéral (40, 40') comprennent au moins un rail profilé qui est logé de manière translatable au niveau d'au moins deux rails de fixation (20).

12. Pont de chargement de fret comprenant au moins un groupe de guidages latéraux selon la revendication 11 et/ou au moins un guidage latéral (10, 10', 10") selon l'une des revendications 1 à 10.

13. Aéronef comportant un pont de chargement de fret (110, 120), en particulier selon la revendication 12, sachant que l'aéronef comprend les éléments de structure porteuse (101, 105, 105', 105", 107, 107', 111, 111', 112, 118) suivants :
- une enveloppe extérieure d'aéronef (101),
- membrures (105, 105', 105", 105‴) reliées à l'enveloppe extérieure d'aéronef (101) ;
- traverses (111, 111') fixées aux membrures (105, 105', 105", 105‴) ;
- longerons (112) fixés aux traverses (111, 111') ;
- profilés latéraux s'étendant parallèlement aux longerons (112), en particulier profilés en Z (118) qui sont reliés (directement) à l'enveloppe extérieure d'aéronef (101) via des supports de cisaillement (107, 107') ;
**caractérisé par**
- au moins un guidage latéral (10, 10', 10") selon l'une des revendications 1 à 10, sachant que le guidage latéral (10, 10', 10") comprend :
- un rail de fixation (20) s'étendant en direction transversale (y) de l'aéronef ;
- au moins un dispositif de guidage latéral (40, 40') qui peut être fixé au rail de fixation (20) dans différentes positions (A, B, C, D),
sachant que le rail de fixation (20) est relié à des éléments de structure porteuse (112, 118) de l'aéronef via un premier point de fixation (P1) et un deuxième point de fixation (P2), sachant que le premier point de fixation (P1) se trouve au-dessus d'un des profilés latéraux et le deuxième point de fixation au-dessus d'une des traverses (111, 111').

14. Aéronef selon la revendication 13,
**caractérisé en ce que**
au moins un guidage latéral (10, 10', 10") est disposé dans la zone du caisson central de voilure, sachant que ce guidage latéral (10, 10', 10") est relié à une glissière (/65) au niveau d'un/du premier point de fixation (P1) et à une des traverses (111, 111') au niveau d'un/du deuxième point de fixation (P2), sachant que la glissière (65) prend appui de manière mobile en direction transversale (y) de l'aéronef sur une saillie (74) qui est reliée à une des membrures (105, 105', 105", 105‴) et/ou à un caisson central de voilure.

15. Aéronef selon la revendication 13 ou 14,
**caractérisé en ce que**
la glissière (65) présente un logement (66) s'étendant en direction transversale (y) de l'aéronef, dans lequel la saillie (74), s'étendant de préférence en direction transversale (y), se met en prise (par complémentarité de forme).
